(19) Europäisches Patentamt / European Patent Office / Office européen des brevets

(11) EP 4 366 042 A1

(12) EUROPEAN PATENT APPLICATION
published in accordance with Art. 153(4) EPC

(43) Date of publication:
**08.05.2024 Bulletin 2024/19**

(21) Application number: **22833255.7**

(22) Date of filing: **29.06.2022**

(51) International Patent Classification (IPC):
***H01M 50/105*** *(2021.01)* ***H01G 11/78*** *(2013.01)*
***H01M 50/119*** *(2021.01)* ***H01M 50/121*** *(2021.01)*
***H01M 50/129*** *(2021.01)* ***H01M 50/133*** *(2021.01)*

(52) Cooperative Patent Classification (CPC):
**H01G 11/78; H01M 50/105; H01M 50/119; H01M 50/121; H01M 50/129; H01M 50/133;**
Y02E 60/10

(86) International application number:
**PCT/JP2022/026108**

(87) International publication number:
**WO 2023/277109 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.06.2021 JP 2021108024**

(71) Applicant: **DAI NIPPON PRINTING CO., LTD.
Tokyo 162-8001 (JP)**

(72) Inventors:
- **TAKAHAGI, Atsuko
Tokyo 162-8001 (JP)**
- **YASUDA, Daisuke
Tokyo 162-8001 (JP)**
- **YAMASHITA, Takanori
Tokyo 162-8001 (JP)**
- **HAYASHI, Shinji
Tokyo 162-8001 (JP)**
- **HIRAKI, Kenta
Tokyo 162-8001 (JP)**
- **YAMAZAKI, Masayasu
Tokyo 162-8001 (JP)**

(74) Representative: **Müller-Boré & Partner
Patentanwälte PartG mbB
Friedenheimer Brücke 21
80639 München (DE)**

# (54) OUTER PACKAGE MATERIAL FOR POWER STORAGE DEVICES, METHOD FOR PRODUCING SAME, AND POWER STORAGE DEVICE

(57) An outer package material for power storage devices, the outer package material being composed of a multilayer body which sequentially comprises at least a base material layer, a barrier layer and a thermally fusible resin layer in this order, wherein: the barrier layer contains an aluminum alloy foil that has a composition containing 0.2% by mass to 2.0% by mass of Fe and 0.1% by mass to 5.0% by mass of Mg; the thermally fusible resin layer is composed of a single layer or a plurality of layers; and a first thermally fusible resin layer that forms a surface of the multilayer body among the thermally fusible resin layers has a logarithmic decrement $\Delta E$ of 0.25 or less at 140°C as determined by rigid pendulum measurement.

EP 4 366 042 A1

**Description**

TECHNICAL FIELD

The present disclosure relates to an exterior material for electrical storage devices, a method for manufacturing the exterior material for electrical storage devices, and an electrical storage device.

BACKGROUND ART

Various types of electrical storage devices have been developed heretofore, and in every electrical storage device, a packaging material (exterior material) is an essential member for sealing electrical storage device elements such as an electrode and an electrolyte. Metallic exterior materials have been often used heretofore as exterior materials for electrical storage devices.

On the other hand, in recent years, electrical storage devices have been required to be diversified in shape and to be thinned and lightened with improvement of performance of electric cars, hybrid electric cars, personal computers, cameras, mobile phones and so on. However, metallic exterior materials for electrical storage devices that have often been heretofore used have the disadvantage that it is difficult to keep up with diversification in shape, and there is a limit on weight reduction.

Thus, in recent years, a film-shaped exterior material with a base material, an aluminum alloy foil layer and a heat-sealable resin layer laminated in this order has been proposed as an exterior material for electrical storage devices which is easily processed into diversified shapes and is capable of achieving thickness reduction and weight reduction (see, for example, Patent Document 1).

In such a film-shaped exterior material, generally, a concave portion is formed by cold molding, electrical storage device elements such as an electrode and an electrolytic solution are disposed in a space formed by the concave portion, and heat-sealable resin layers are heat-sealed to each other to obtain an electrical storage device in which electrical storage device elements are housed in an exterior material.

PRIOR ART DOCUMENT

PATENT DOCUMENT

Patent Document 1: Japanese Patent Laid-open Publication No. 2008-287971

SUMMARY OF THE INVENTION

PROBLEMS TO BE SOLVED BY THE INVENTION

From the viewpoint of, for example, increasing the energy density of an electrical storage device, the film-shaped exterior material is required to have a deep concave portion formed by molding. Therefore, the aluminum alloy foil used for an exterior material for electrical storage devices is required to have high moldability.

As an aluminum alloy foil excellent in moldability, an Al-Fe alloy-based soft aluminum alloy foil is known. As specific examples of such a soft aluminum alloy foil, aluminum alloy foils are known which have a composition specified in JIS H4160: 1994 A8021H-O, a composition specified in JIS H4160: 1994 A8079H-O, a composition specified in JIS H4000: 2014 A8021P-O, or a composition specified in JIS H4000: 2014 A8079P-O.

On the other hand, in the step of molding an exterior material for electrical storage devices, the step of accommodating an electrical storage device element in an exterior material for electrical storage devices and performing heat-sealing, the step of bending a heat-sealed portion, and the like, an external terminal and an aluminum alloy foil of an exterior material for electrical storage devices may be short-circuited through contaminants, or the external terminal and the aluminum alloy foil of the exterior material for electrical storage devices may be short-circuited by getting close to each other or contacting each other due to pressure unevenness during heat-sealing, and if minute cracks or pinholes are generated in a heat-sealable resin layer located at an innermost layer, an electric current may pass between the aluminum alloy foil of the exterior material for electrical storage devices and the external terminal through an electrolytic solution penetrating the heat-sealable resin layer, resulting in corrosion of the aluminum alloy foil by alloying with lithium ions in the electrolytic solution (in particular, if the aluminum alloy foil and a negative electrode terminal are short-circuited through the electrolytic solution, the aluminum alloy foil is likely to corrode).

In sealing of an electrical storage device element, a heat-sealable resin layer is heat-sealed by applying a high temperature and a high pressure to an exterior material for electrical storage devices. However, there is a problem that application of a high temperature and a high pressure to exterior material for electrical storage devices crushes the heat-sealable resin layer located on a surface thereof, so that the insulation quality of the exterior material for electrical storage devices is deteriorated.

Under these circumstances, an object of the present disclosure is to provide an exterior material for electrical storage devices in which at least a base material layer, a barrier layer including an aluminum alloy foil layer, and a heat-sealable resin layer are laminated in this order. The exterior material for electric storage devices is excellent in moldability, and effectively resists corrosion of the aluminum alloy foil if an electric current passes in a state where an electrolytic solution is deposited, with the exterior material having improved insulation quality.

MEANS FOR SOLVING THE PROBLEM

The inventors of the present disclosure have extensively conducted studies for achieving the above-described object. Specifically, the present inventors have conducted studies on the formulation of an aluminum alloy foil used for a barrier layer of an exterior material for electrical storage devices, and have found that when the contents of Mg and Fe are set to be within predetermined ranges, the exterior material for electrical storage devices maintains high moldability and effectively resists corrosion if an electric current passes in a state where an electrolytic solution is deposited. Further, the inventors of the present disclosure have also found that when the aluminum alloy foil is used for a barrier layer, and a logarithmic decrement $\Delta E$ of a first heat-sealable resin layer of the heat-sealable resin layer, which forms a surface of the laminate, is set equal to or smaller than a predetermined value at 140°C in measurement with a rigid pendulum, crushing in heat-sealing of the heat-sealable resin layer is effectively suppressed to improve insulation quality.

The present disclosure has been completed by further conducting studies on the basis the above-mentioned findings. That is, the present disclosure provides an invention of an aspect as described below.

An exterior material for electrical storage devices including a laminate including at least a base material layer, a barrier layer, and a heat-sealable resin layer in this order, in which

the barrier layer includes an aluminum alloy foil formulated to have a Fe content of 0.2 mass% or more and 2.0 mass% or less, and a Mg content of 0.1 mass% or more and 5.0 mass% or less,
the heat-sealable resin layer is composed of a single layer or multiple layers, and
a first heat-sealable resin layer of the heat-sealable resin layer, which forms a surface of the laminate, has a logarithmic decrement $\Delta E$ of 0.25 or less at 140°C in measurement with a rigid pendulum.

ADVANTAGES OF THE INVENTION

According to the present disclosure, it is possible to provide an exterior material for electrical storage devices in which at least a base material layer, a barrier layer including an aluminum alloy foil layer, and a heat-sealable resin layer are laminated in this order. The exterior material for electric storage devices is excellent in moldability, and effectively resists corrosion of the aluminum alloy foil if an electric current passes in a state where an electrolytic solution is deposited, with the exterior material having improved insulation quality. According to the present disclosure, it is also possible to provide a method for manufacturing the exterior material for electrical storage devices, and an electrical storage device.

BRIEF DESCRIPTION OF THE DRAWINGS

Fig. 1 is a schematic diagram showing an example of a cross-sectional structure of an exterior material for electrical storage devices according to the present disclosure.
Fig. 2 is a schematic diagram showing an example of a cross-sectional structure of an exterior material for electrical storage devices according to the present disclosure.
Fig. 3 is a schematic diagram showing an example of a cross-sectional structure of an exterior material for electrical storage devices according to the present disclosure.
Fig. 4 is a schematic diagram showing an example of a cross-sectional structure of an exterior material for electrical storage devices according to the present disclosure.
Fig. 5 is a schematic diagram showing an example of a cross-sectional structure of an exterior material for electrical storage devices according to the present disclosure.
Fig. 6 is a schematic diagram for illustrating a method for evaluating corrosion resistance in an example.
Fig. 7 is a schematic diagram showing crystal grains and second phase grains in a thickness-direction cross-section of an aluminum alloy foil.
Fig. 8 is a microscope image of a surface of an aluminum alloy foil observed after evaluation of corrosion resistance, showing an example in which corrosion is suitably suppressed.

Fig. 9 is a microscope image of a surface of an aluminum alloy foil observed after evaluation of corrosion resistance, showing an example in which corrosion is not sufficiently suppressed.

Fig. 10 is a schematic diagram for illustrating a method for measuring a logarithmic decrement $\Delta E$ in measurement with a rigid pendulum.

Fig. 11 is a schematic diagram for illustrating a protruding portion formed inside a heat-sealed portion of a heat-sealable resin layer.

Fig. 12 is a view showing a planar shape of a square punch for use in a critical molding height test in an example of the present disclosure.

EMBODIMENTS OF THE INVENTION

An exterior material for electrical storage devices according to the present disclosure includes a laminate including at least a base material layer, a barrier layer, and a heat-sealable resin layer in this order, in which the barrier layer includes an aluminum alloy foil formulated to have a Fe content of 0.2 mass% or more and 2.0 mass% or less, and a Mg content of 0.1 mass% or more and 5.0 mass% or less, the heat-sealable resin layer is composed of a single layer or multiple layers, and a first heat-sealable resin layer of the heat-sealable resin layer, which forms a surface of the laminate, has a logarithmic decrement $\Delta E$ of 0.25 or less at 140°C in measurement with a rigid pendulum. Due to having such a configuration, the exterior material for electrical storage devices according to the present disclosure is excellent in moldability, and effectively resists corrosion of the aluminum alloy foil if an electric current passes in a state where an electrolytic solution is deposited, with the exterior material having improved insulation quality.

Hereinafter, the exterior material for electrical storage devices according to the present disclosure, a method for manufacturing the exterior material for electrical storage devices, and an electrical storage device will be described in detail. In the present specification, a numerical range indicated by the term "A to B" means "A or more" and "B or less". For example, the expression of "2 to 15 mm" means 2 mm or more and 15 mm or less.

1. Exterior material for electrical storage devices

As shown in, for example, Figs. 1 to 5, an exterior material 10 for electrical storage devices according to the present disclosure includes a laminate including a base material layer 1, a barrier layer 3 and a heat-sealable resin layer 4 in this order. In the exterior material 10 for electrical storage devices, the base material layer 1 is on the outermost layer side, and the heat-sealable resin layer 4 is an innermost layer. In construction of the electrical storage device using the exterior material 10 for electrical storage devices and electrical storage device elements, the electrical storage device elements are put in a space formed by heat-sealing the peripheral portions of heat-sealable resin layers 4 of the exterior material 10 for electrical storage devices which face each other. In the laminate forming the exterior material 10 for electrical storage devices according to the present disclosure, the heat-sealable resin layer 4 is on the inner side with respect to the barrier layer 3, and the base material layer 1 is on the outer side with respect to the barrier layer 3.

In the exterior material 10 for electrical storage devices according to the present disclosure, the heat-sealable resin layer 4 is composed of a single layer or multiple layers, and a first heat-sealable resin layer 41 of the heat-sealable resin layer 4 forms a surface of the laminate. Fig. 1 and Fig. 2 show a laminated configuration in which the heat-sealable resin layer 4 is composed of a single layer that is the first heat-sealable resin layer 41, and the first heat-sealable resin layer 41 forms a surface of the laminate. In addition, Fig. 3 to Fig. 5 show a laminated configuration in which the heat-sealable resin layer 4 is composed of multiple layers (two layers) that are the first heat-sealable resin layer 41 and a second heat-sealable resin layer 42, and the first heat-sealable resin layer 41 forms a surface of the laminate. As described later, the heat-sealable resin layer 4 may further include other heat-sealable resin layers such as a third heat-sealable resin layer and a fourth heat-sealable resin layer on the barrier layer 3 side of the second heat-sealable resin layer 42 in addition to the first heat-sealable resin layer 41 and the second heat-sealable resin layer 42.

In construction of the electrical storage device using the exterior material 10 for electrical storage devices and electrical storage device elements, the electrical storage device elements are put in a space formed by heat-sealing the peripheral portions of the first heat-sealable resin layers 41 of the exterior material 10 for electrical storage devices which face each other.

The barrier layer 3 of the exterior material for electrical storage devices according to the present disclosure includes an aluminum alloy foil. The barrier layer 3 of the exterior material for electrical storage devices according to the present disclosure can be formed from an aluminum alloy foil. The exterior material for electrical storage devices according to the present disclosure which includes an aluminum alloy foil satisfying a predetermined formulation described later is excellent in moldability, and effectively resists corrosion of the aluminum alloy foil. Further, In the exterior material for electrical storage devices, the logarithmic decrement $\Delta E$ at 140°C is 0.25 or less, so that crushing in heat-sealing of the first heat-sealable resin layer 41 is effectively suppressed, and in synergy with the barrier layer (aluminum alloy foil), the insulation quality of the exterior material for electrical storage devices can be improved.

As shown in, for example, Figs. 2 to 5, the exterior material 10 for electrical storage devices may have an adhesive agent layer 2 between the base material layer 1 and the barrier layer 3 if necessary for the purpose of, for example, improving bondability between these layers. As shown in, for example, Fig. 2, Fig. 4 and Fig. 5, an adhesive layer 5 may be present between the barrier layer 3 and the heat-sealable resin layer 4 if necessary for the purpose of, for example, improving bondability between these layers. As shown in Fig. 5, a surface coating layer 6 or the like may be provided outside the base material layer 1 (on a side opposite to the heat-sealable resin layer 4 side).

The thickness of the laminate forming the exterior material 10 for electrical storage devices is not particularly limited, and is, for example, 190 μm or less, preferably about 180 μm or less, about 155 μm or less, or about 120 μm or less, from the viewpoint of cost reduction, energy density improvement, and the like. The thickness of the laminate forming the exterior material 10 for electrical storage devices is preferably about 35 μm or more, about 45 μm or more, or about 60 μm or more, from the viewpoint of maintaining the function of an exterior material for electrical storage devices, which is protection of an electrical storage device element. The laminate forming the exterior material 10 for electrical storage devices is preferably in the range of, for example, about 35 to 190 μm, about 35 to 180 μm, about 35 to 155 μm, about 35 to 120 μm, about 45 to 190 μm, about 45 to 180 μm, about 45 to 155 μm, about 45 to 120 μm, about 60 to 190 μm, about 60 to 180 μm, about 60 to 155 μm, and about 60 to 120 μm, particularly preferably about 60 to 155 μm.

In the exterior material 10 for electrical storage devices, the ratio of the total thickness of the base material layer 1, the adhesive agent layer 2 provided if necessary, the barrier layer 3, the adhesive layer 5 provided if necessary, the heat-sealable resin layer 4, and the surface coating layer 6 provided if necessary to the thickness (total thickness) of the laminate forming the exterior material 10 for electrical storage devices is preferably 90% or more, more preferably 95% or more, still more preferably 98% or more. As a specific example, when the exterior material 10 for electrical storage devices according to the present disclosure includes the base material layer 1, the adhesive agent layer 2, the barrier layer 3, the adhesive layer 5 and the heat-sealable resin layer 4, the ratio of the total thickness of these layers to the thickness (total thickness) of the laminate forming the exterior material 10 for electrical storage devices is preferably 90% or more, more preferably 95% or more, still more preferably 98% or more. In addition, when the exterior material 10 for electrical storage devices according to the present disclosure is a laminate including the base material layer 1, the adhesive agent layer 2, the barrier layer 3 and the heat-sealable resin layer 4, the ratio of the total thickness of these layers to the thickness (total thickness) of the laminate forming the exterior material 10 for electrical storage devices may be, for example, 80% or more, preferably 90% or more, more preferably 95% or more, still more preferably 98% or more.

In the exterior material for electrical storage devices, Machine Direction (MD) and Transverse Direction (TD) in the process for manufacturing thereof can be discriminated from each other for the barrier layer 3 described later. When the barrier layer 3 includes an aluminum alloy foil or a stainless steel foil, linear streaks called rolling indentations are formed on the surface of the metal foil in the rolling direction (RD) of the metal foil. Since the rolling indentations extend along the rolling direction, the rolling direction of the metal foil can be known by observing the surface of the metal foil. In the process for manufacturing of the laminate, the MD of the laminate and the RD of the metal foil normally coincides with each other, and therefore by observing the surface of the metal foil of the laminate to identify the rolling direction (RD) of the metal foil, the MD of the laminate can be identified. Since the TD of the laminate is perpendicular to the MD of the laminate, the TD of the laminate can be identified.

If the MD of the exterior material for electrical storage devices cannot be identified by the rolling indentations of the aluminum alloy foil, the MD can be identified by the following method. Examples of the method for identifying the MD of the exterior material for electrical storage devices include a method in which a cross-section of the heat-sealable resin layer of the exterior material for electrical storage devices is observed with an electron microscope to examine a sea-island structure. In the method, the direction parallel to a cross-section in which the average of the diameters of the island shapes in a direction perpendicular to the thickness direction of the heat-sealable resin layer is maximum can be determined as MD. Specifically, a cross-section in the length direction of the heat-sealable resin layer and cross-sections (a total of 10 cross-sections) at angular intervals of 10 degrees from a direction parallel to the cross-section in the length direction to a direction perpendicular to the cross-section in the length direction are observed with an electron microscope photograph to examine sea-island structures. Next, in each cross-section, the shape of each island is observed. For the shape of each island, the linear distance between the leftmost end in a direction perpendicular to the thickness direction of the heat-sealable resin layer and the rightmost end in the perpendicular direction is taken as a diameter y. In each cross-section, the average of the top 20 diameters y in descending order of the diameter y of the island shape is calculated. The direction parallel to a cross-section having the largest average of the diameters y of the island shapes is determined as MD.

Layers forming exterior material for electrical storage devices

[Base material layer 1]

In the present disclosure, the base material layer 1 is a layer provided for the purpose of, for example, exhibiting a function as a base material of the exterior material for electrical storage devices. The base material layer 1 is located on the outer layer side of the exterior material for electrical storage devices.

The material for forming the base material layer 1 is not particularly limited as long as it has a function as a base material, i.e., at least insulation quality. The base material layer 1 can be formed using, for example, a resin, and the resin may contain additives described later.

When the base material layer 1 is formed of a resin, the base material layer 1 may be, for example, a resin film formed of a resin, or may be formed by applying a resin. The resin film may be an unstretched film or a stretched film. Examples of the stretched film include uniaxially stretched films and biaxially stretched films, and biaxially stretched films are preferable. Examples of the stretching method for forming a biaxially stretched film include a sequential biaxial stretching method, an inflation method, and a simultaneous biaxial stretching method. Examples of the method for applying a resin include a roll coating method, a gravure coating method and an extrusion coating method.

Examples of the resin that forms the base material layer 1 include resins such as polyester, polyamide, polyolefin, epoxy resin, acrylic resin, fluororesin, polyurethane, silicone resin and phenol resin, and modified products of these resins. The resin that forms the base material layer 1 may be a copolymer of these resins or a modified product of the copolymer. Further, a mixture of these resins may be used.

Of these resins, polyester and polyamide are preferable as resins that form the base material layer 1.

Specific examples of the polyester include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). These polyesters may be used alone, or may be used in combination of two or more thereof.

Specific examples of the polyamide include polyamides such as aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a structural unit derived from terephthalic acid and/or isophthalic acid, such as nylon 61, nylon 6T, nylon 6IT and nylon 6I6T (I denotes isophthalic acid and T denotes terephthalic acid), and polyamides containing aromatics, such as polyamide MXD6 (polymethaxylylene adipamide); alicyclic polyamides such as polyamide PACM6 (polybis(4-aminocyclohexyl)methaneadipamide; polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. These polyamides may be used alone, or may be used in combination of two or more thereof.

The base material layer 1 contains preferably at least one of a polyester film, a polyamide film and a polyolefin film, preferably at least one of a stretched polyester film, a stretched polyamide film and a stretched polyolefin film, still more preferably at least one of a stretched polyethylene terephthalate film, a stretched polybutylene terephthalate film, a stretched nylon film and a stretched polypropylene film, even more preferably at least one of a biaxially stretched polyethylene terephthalate film, a biaxially stretched polybutylene terephthalate film, a biaxially stretched nylon film, and a biaxially stretched polypropylene film.

The base material layer 1 may be a single layer, or may include two or more layers. When the base material layer 1 includes two or more layers, the base material layer 1 may be a laminate obtained by laminating resin films with an adhesive or the like, or a resin film laminate obtained by co-extruding resins to form two or more layers. The resin film laminate obtained by co-extruding resins to form two or more layers may be used as the base material layer 1 in an unstretched state, or may be uniaxially stretched or biaxially stretched and used as the base material layer 1.

Specific examples of the resin film laminate with two or more layers in the base material layer 1 include laminates of a polyester film and a nylon film, nylon film laminates with two or more layers, and polyester film laminates with two or more layers. Laminates of a stretched nylon film and a stretched polyester film, stretched nylon film laminates with two or more layers, and stretched polyester film laminates with two or more layers are preferable. For example, when the base material layer 1 is a resin film laminate with two layers, the base material layer 1 is preferably a laminate of a polyester resin film and a polyester resin film, a laminate of a polyamide resin film and a polyamide resin film, or a laminate of a polyester resin film and a polyamide resin film, more preferably a laminate of a polyethylene terephthalate film and a polyethylene terephthalate film, a laminate of a nylon film and a nylon film, or a laminate of a polyethylene

terephthalate film and a nylon film. Since the polyester resin is hardly discolored even in the case where for example, an electrolytic solution is deposited on the surface, it is preferable that the polyester resin film is located at the outermost layer of the base material layer 1 when the base material layer 1 is a resin film laminate with two or more layers.

When the base material layer 1 is a resin film laminate with two or more layers, the two or more resin films may be laminated with an adhesive interposed therebetween. Specific examples of the preferred adhesive include the same adhesives as those exemplified for the adhesive agent layer 2 described later. The method for laminating a resin film having two or more layers is not particularly limited, and a known method can be employed. Examples thereof include a dry lamination method, a sand lamination method, an extrusion lamination method and a thermal lamination method, and a dry lamination method is preferable. When the resin film is laminated by a dry lamination method, it is preferable to use a polyurethane adhesive as the adhesive. Here, the thickness of the adhesive is, for example, about 2 to 5 μm. In addition, the lamination may be performed with an anchor coat layer formed on the resin film. Examples of the anchor coat layer include the same adhesives as those exemplified for the adhesive agent layer 2 described later. Here, the thickness of the anchor coat layer is, for example, about 0.01 to 1.0 μm.

Additives such as a slipping agent, a flame retardant, an antiblocking agent, an antioxidant, a light stabilizer, a tackifier and an antistatic agent may be present on at least one of the surface of the base material layer 1 and/or inside the base material layer 1. The additives may be used alone, or may be used in combination of two or more thereof.

In the present disclosure, it is preferable that a slipping agent is present on the surface of the base material layer 1 from the viewpoint of enhancing the moldability of the exterior material for electrical storage devices. The slipping agent is not particularly limited, and is preferably an amide-based slipping agent. Specific examples of the amide-based slipping agent include saturated fatty acid amides, unsaturated fatty acid amides, substituted amides, methylol amides, saturated fatty acid bisamides, unsaturated fatty acid bisamides, fatty acid ester amides, and aromatic bisamides. Specific examples of the saturated fatty acid amide include lauric acid amide, palmitic acid amide, stearic acid amide, behenic acid amide, and hydroxystearic acid amide. Specific examples of unsaturated fatty acid amide include oleic acid amide and erucic acid amide. Specific examples of the substituted amide include N-oleylpalmitic acid amide, N-stearyl stearic acid amide, N-stearyl oleic acid amide, N-oleyl stearic acid amide, and N-stearyl erucic acid amide. Specific examples of the methylolamide include methylolstearic acid amide. Specific examples of the saturated fatty acid bisamide include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylenehydroxystearic acid amide, N,N'-distearyl adipic acid amide, and N,N'-distearyl sebacic acid amide. Specific examples of the unsaturated fatty acid bisamide include ethylenebisoleic acid amide, ethylenebiserucic acid amide, hexamethylenebisoleic acid amide, N,N'-dioleyladipic acid amide, and N,N'-dioleylsebacic acid amide. Specific examples of the fatty acid ester amide include stearoamideethyl stearate. Specific examples of the aromatic bisamide include m-xylylenebisstearic acid amide, m-xylylenebishydroxystearic acid amide, and N,N'-distearylisophthalic acid amide. The slipping agents may be used alone, or may be used in combination of two or more thereof.

When the slipping agent is present on the surface of the base material layer 1, the amount of the slipping agent present is not particularly limited, and is preferably about 3 $mg/m^2$ or more, more preferably about 4 to 15 $mg/m^2$, still more preferably about 5 to 14 $mg/m^2$.

The slipping agent present on the surface of the base material layer 1 may be one obtained by exuding the slipping agent contained in the resin forming the base material layer 1, or one obtained by applying the slipping agent to the surface of the base material layer 1.

The thickness of the base material layer 1 is not particularly limited as long as a function as a base material is performed, and the thickness of the base material layer 1 is, for example, about 3 to 50 μm, preferably about 10 to 35 μm. When the base material layer 1 is a resin film laminate with two or more layers, the thickness of the resin film forming each layer is preferably about 2 to 25 μm.

[Adhesive agent layer 2]

In the exterior material for electrical storage devices according to the present disclosure, the adhesive agent layer 2 is a layer provided between the base material layer 1 and the barrier layer 3 if necessary for the purpose of enhancing bondability between these layers.

The adhesive agent layer 2 is formed from an adhesive capable of bonding the base material layer 1 and the barrier layer 3. The adhesive used for forming the adhesive agent layer 2 is not limited, and may be any of a chemical reaction type, a solvent volatilization type, a heat melting type, a heat pressing type, and the like. The adhesive agent may be a two-liquid curable adhesive (two-liquid adhesive), a one-liquid curable adhesive (one-liquid adhesive), or a resin that does not involve curing reaction. The adhesive agent layer 2 may be a single layer or a multi-layer.

Specific examples of the adhesive component contained in the adhesive include polyester such as polyethylene terephthalate, polybutylene terephthalate, polyethylene naphthalate, polybutylene naphthalate, polyethylene isophthalate and copolyester; polyether; polyurethane; epoxy resins; phenol resins; polyamides such as nylon 6, nylon 66, nylon

12 and copolymerized polyamide; polyolefin-based resins such as polyolefins, cyclic polyolefins, acid-modified polyolefins and acid-modified cyclic polyolefins; cellulose; (meth)acrylic resins; polyimide; polycarbonate; amino resins such as urea resins and melamine resins; rubbers such as chloroprene rubber, nitrile rubber and styrene-butadiene rubber; and silicone resins. These adhesive components may be used alone, or may be used in combination of two or more thereof. Of these adhesive components, polyurethane-based adhesives are preferable. In addition, the adhesive strength of these resins used as adhesive components can be increased by using an appropriate curing agent in combination. As the curing agent, appropriate one is selected from polyisocyanate, a polyfunctional epoxy resin, an oxazoline group-containing polymer, a polyamine resin, an acid anhydride and the like according to the functional group of the adhesive component.

Examples of the polyurethane adhesive include polyurethane adhesives containing a main component containing a polyol compound and a curing agent containing an isocyanate compound. The polyurethane adhesive is preferably a two-liquid curable polyurethane adhesive having polyol such as polyester polyol, polyether polyol or acrylic polyol as a main component, and aromatic or aliphatic polyisocyanate as a curing agent. Preferably, polyester polyol having a hydroxyl group in the side chain in addition to a hydroxyl group at the end of the repeating unit is used as the polyol compound. Since the adhesive agent layer 2 is formed of a polyurethane adhesive, excellent electrolytic solution resistance is imparted to the exterior material for electrical storage devices, so that peeling of the base material layer 1 is suppressed even if the electrolytic solution is deposited on the side surface.

Other components may be added to the adhesive agent layer 2 as long as bondability is not inhibited, and the adhesive agent layer 2 may contain a colorant, a thermoplastic elastomer, a tackifier, a filler, and the like. When the adhesive agent layer 2 contains a colorant, the exterior material for electrical storage devices can be colored. As the colorant, known colorants such as pigments and dyes can be used. The colorants may be used alone, or may be used in combination of two or more thereof.

The type of pigment is not particularly limited as long as the bondability of the adhesive agent layer 2 is not impaired. Examples of the organic pigment include azo-based pigments, phthalocyanine-based pigments, quinacridone-based pigments, anthraquinone-based pigments, dioxazine-based pigments, indigothioindigo-based pigments, perinone-perylene-based pigments, isoindolenine-based pigments and benzimidazolone-based pigments. Examples of the inorganic pigment include carbon black-based pigments, titanium oxide-based pigments, cadmium-based pigments, lead-based pigments, chromium-based pigments and iron-based pigments, and also fine powder of mica (mica) and fish scale foil.

Of the colorants, carbon black is preferable for the purpose of, for example, blackening the appearance of the exterior material for electrical storage devices.

The average particle diameter of the pigment is not particularly limited, and is, for example, about 0.05 to 5 μm, preferably about 0.08 to 2 μm. The average particle size of the pigment is a median diameter measured by a laser diffraction/scattering particle size distribution measuring apparatus.

The content of the pigment in the adhesive agent layer 2 is not particularly limited as long as the exterior material for electrical storage devices is colored, and the content is, for example, about 5 to 60 mass%, preferably 10 to 40 mass%.

The thickness of the adhesive agent layer 2 is not particularly limited as long as the base material layer 1 and the barrier layer 3 can be bonded to each other, and for example, the thickness is about 1 μm or more, or about 2 μm or more for the lower limit, and about 10 μm or less, or about 5 μm or less for the upper limit, and is preferably in the range of about 1 to 10 μm, about 1 to 5 μm, about 2 to 10 μm, or about 2 to 5 μm.

[Colored layer]

The colored layer is a layer provided between the base material layer 1 and the barrier layer 3 if necessary (not shown). When the adhesive agent layer 2 is present, the colored layer may be provided between the base material layer 1 and the adhesive agent layer 2 or between the adhesive agent layer 2 and the barrier layer 3. The colored layer may be provided outside the base material layer 1. By providing the colored layer, the exterior material for electrical storage devices can be colored.

The colored layer can be formed by, for example, applying an ink containing a colorant to the surface of the base material layer 1, the surface of the adhesive agent layer 2, or the surface of the barrier layer 3. As the colorant, known colorants such as pigments and dyes can be used. The colorants may be used alone, or may be used in combination of two or more thereof.

Specific examples of the colorant contained in the colored layer include the same colorants as those exemplified in the section [Adhesive agent layer 2].

[Barrier layer 3]

In the exterior material for electrical storage devices, the barrier layer 3 is a layer which suppresses at least

ingress of moisture.

The barrier layer 3 of the exterior material for electrical storage devices according to the present disclosure includes an aluminum alloy foil.

The aluminum alloy foil includes an aluminum alloy foil formulated to have a Fe (iron) content of 0.2 mass% or more and 2.0 mass% or less, and a Mg (magnesium) content of 0.1 mass% or more and 5.0 mass% or less. The main component of the aluminum alloy foil is Al (aluminum), and aluminum constitutes, for example, 92.10 mass% or more of the aluminum alloy foil. Preferably, the aluminum alloy foil contains Si (silicon). The content of silicon is preferably about 0.50 mass% or less.

The aluminum alloy foil may contain components other than Fe, Mg and Al. Examples of other components include inevitable impurities such as Si (silicon), Mn (manganese), Cu (copper), Cr (chromium) and Zn (zinc). The total amount of inevitable impurities in the aluminum alloy foil are, for example, 0.40 mass% or less, with each inevitable impurity being contained at 0.10 mass% or less. There may be one type of component or two or more types of components as other components.

In the aluminum alloy foil, Fe is crystallized as an Al-Fe-based intermetallic compound during casting, and when the compound has a large size, Fe forms a site of recrystallization during annealing, so that there is an effect of refinement of recrystallized grains. If the content of Fe is less than the lower limit (0.2 mass%), the distribution density of large intermetallic compounds decreases, so that the effect of crystal grain refinement is low, and the final crystal grain size distribution becomes uneven. If the content of Fe is more than the upper limit (2.0 mass%), the effect of crystal grain refinement reaches a plateau or rather decreases, and further, the Al-Fe-based intermetallic compound produced during casting has a very large size, so that the elongation and the rolling property of the aluminum alloy foil are deteriorated. Thus, the content of Fe is set to be in the above-described range of 0.2 mass% or more and 2.0 mass% or less. For the same reason, the lower limit of the content of Fe is preferably 0.5 mass%, and for the same reason, it is more preferable that the lower limit of the content of Fe is 1.0 mass% and the upper limit of the content of Fe is 1.8 mass%.

In the aluminum alloy foil, Mg forms a solid solution with aluminum, and the strength of the aluminum alloy foil can be increased by solid solution intensification. In addition, Mg is likely to form a solid solution with aluminum, so that even when Mg is contained together with Fe, there is little risk that the intermetallic compound increases in size, leading to deterioration moldability and the rolling property. If the content of Mg is less than the lower limit (0.1 mass%), improvement of strength is insufficient, and if the content of Mg is more than the upper limit (5.0 mass%), the aluminum alloy foil hardens, leading to deterioration of the rolling property and moldability. The lower limit is particularly preferably 0.5 mass%. If the content of Mg is more than 5.0 mass%, it is possible to obtain an aluminum alloy foil having very high strength although the aluminum alloy foil hardens, leading to deterioration of moldability and the rolling property. It is desirable that the content of Mg be in the range of more than 0.5 mass% and 4.5 mass% or less. Addition of Mg improves corrosion resistance of the exterior material for electrical storage devices to an electrolytic solution. While details of the mechanism are not evident, an increase in added amount of Mg makes it harder for the aluminum alloy foil to react with lithium and the like in the electrolytic solution, so that it is possible to suppress micronization of the aluminum alloy foil and generation of through-holes.

In the aluminum alloy foil, a very small amount of Si may be added for the purpose of increasing the strength of the aluminum alloy foil, and in the present disclosure, the amount of Si is set to 0.5 mass% to reduce the size of the Al-Fe-Si-based intermetallic compound generated during casting, resulting in improvement of the elongation and the moldability of the aluminum alloy foil. Accordingly, even if the aluminum alloy foil has a small thickness, breakage with an intermetallic compound as an origination point is unlikely to occur, and the rolling property is improved. When a large amount of Si is not added to an alloy having a high Mg content, the amount of Mg-Si-based precipitates generated decreases, and thus deterioration of the rolling property and a decrease in the amount of Mg as a solid solution are unlikely to occur, so that the strength is hardly reduced. For the same reason, it is desirable that the content of Si be 0.2 mass% or less. It is desirable that the lower limit value of the Si content be 0.001 mass%, and it is more desirable that the lower limit value of the Si content be 0.005 mass%. The moldability, rolling property, fineness of crystal grains and ductility tend to be better as the content of Si decrease.

The aluminum alloy foil can contain inevitable impurities such as Cu and Mn. It is desirable that the content of these impurities be, for example, 0.1 mass% or less. In the present disclosure, the upper limit of the content of the inevitable impurities is not limited to the above-described numerical value. However, Mn hardly forms a solid solution with aluminum, and therefore is different from Mg in that it cannot be expected that the strength of the aluminum alloy foil is significantly increased by solid solution intensification. In addition, if a large amount of Mn is added to an alloy having a large Fe content, the risk of increasing the size of the intermetallic compound and generating a large Al-Fe-Mn-based intermetallic compound may increase, leading to deterioration of the rolling property and moldability. Thus, it is desirable that the Mn content be 0.1 mass% or less. It is more desirable that the Mn content be 0.08 mass% or less. In addition, it is desirable that the lower limit value of the Mn content be 0.001 mass%, and it is more desirable that the lower limit value of the Mn content be 0.005 mass%.

According to the present disclosure, in the aluminum alloy foil, the aluminum alloy foil is formulated to have a

Mn (manganese) content of preferably 0.1 mass% or less, more preferably 0.01 mass% or more and 0.1 mass% or less, still more preferably 0.01 mass% or more and 0.08 mass% or less from the viewpoint of obtaining an exterior material for electrical storage devices which is excellent in moldability and effectively resists corrosion if an electric current passes in a state where an electrolytic solution is deposited.

Preferred formulations and properties of the aluminum alloy foil will be described more specifically.

• Fe content: 0.2 mass% or more and 2.0 mass% or less

Fe is crystallized as an Al-Fe-based intermetallic compound during casting, and when the compound has a large size, Fe forms a site of recrystallization during annealing, so that there is an effect of refinement of recrystallized grains. If the content of Fe is less than the lower limit, the distribution density of large intermetallic compounds decreases, so that the effect of crystal grain refinement is low, and the final crystal grain size distribution becomes uneven. If the content of Fe is more than the upper limit, the effect of crystal grain refinement reaches a plateau or rather decreases, and further, the Al-Fe-based intermetallic compound produced during casting has a very large size, so that the elongation and the rolling property are deteriorated. Thus, the content of Fe is set to be in the above-described range. For the same reason, the lower limit of the content of Fe is preferably 0.5 mass%, and for the same reason, it is more preferable that the lower limit of the content of Fe is 1.0 mass% and the upper limit of the content of Fe is 1.8 mass%.

• Mg content: 0.1 mass% or more and 5.0 mass% or less

Mg forms a solid solution with aluminum, and the strength of the soft alloy foil can be increased by solid solution intensification. In addition, Mg is likely to form a solid solution with aluminum, so that even when Mg is contained together with Fe, there is little risk that the intermetallic compound increases in size, leading to deterioration moldability and the rolling property. If the content of Mg is less than the lower limit, improvement of strength is insufficient, and if the content of Mg is more than the upper limit, the aluminum alloy foil hardens, leading to deterioration of the rolling property and moldability. The content of Mg is particularly preferably in the range of 0.5 mass% or more and 5.0 mass% or less.

It was also confirmed that the corrosion resistance of a lithium ion secondary battery to an electrolytic solution was improved by adding Mg. While details of the mechanism are not evident, an increase in added amount of Mg makes it harder for the aluminum alloy foil to react with lithium in the electrolytic solution, so that it is possible to suppress micronization of the aluminum alloy foil and generation of through-holes. When particularly evident improvement of corrosion resistance is expected, it is desirable that the lower limit of the content of Mg be 0.5 mass% although moldability is slightly deteriorated.

• Si content: preferably 0.5 mass% or less

A very small amount of Si may be added for the purpose of increasing the strength of the foil, and in the present disclosure, the content of Si is preferably 0.5 mass% or less because when the content of Si is 0.5% or less, the size of an Al-Fe-Si-based intermetallic compound generated during casting decreases, leading to improvement of the elongation and moldability of the foil, and even if the foil thickness is small, breakage with the intermetallic compound as an origination point is unlikely to occur and the rolling property is improved. When a large amount of Si is not added, the amount of Mg-Si-based precipitates generated decreases, and thus deterioration of the rolling property and a decrease in the amount of Mg as a solid solution are unlikely to occur, so that the strength is hardly reduced. For the same reason, it is desirable that the content of Si be 0.2 mass% or less. The moldability, the rolling property, and the degree of fineness of crystal grains tend to be improved as the content of Si decrease.

• Inevitable impurity

In addition, inevitable impurities such as Cu and Mn may be contained. It is desirable that the amount of each element in the inevitable impurities be 0.1 mass% or less. In the present disclosure, the upper limit of the content of the inevitable impurities is not limited to the above-described numerical value.

However, Mn hardly forms a solid solution with aluminum, and therefore is different from Mg in that it cannot be expected that the strength of the soft foil is significantly increased by solid solution intensification. In addition, if a large amount of Mn is added to an alloy having a large Fe content, the risk of increasing the size of the intermetallic compound and generating a large Al-Fe-Mn-based intermetallic compound may increase, leading to deterioration of the rolling property and moldability. Thus, it is desirable that the Mn content be 0.1 mass% or less.

• Texture orientation density: 15 or less in each of Copper orientation and R orientation

The texture has a significant influence on the mechanical properties and moldability of the foil. For obtaining good moldability, it is desirable to maintain a density of 15 or less in each of Copper orientation and R orientation. More preferably, the density in each of the orientations is 10 or less.

• Mg concentration of surface: 5.0 atom% or more and oxide film thickness: 80 Å or more (Mg content: 0.1 mass% or more and 1.5 mass% or less)

While details of the mechanism are not evident, the Mg concentration of the foil surface and the oxide film thickness have been confirmed to influence corrosion resistance to an electrolytic solution of a lithium secondary battery. When the Mg concentration of the foil surface is high, and a thick oxide film, corrosion resistance is improved. Thus, when the Mg content is 0.1 mass% or more and 1.5 mass% or less, it is desirable that the Mg concentration of the aluminum foil surface be 5.0 atom% or more and the oxide film thickness be 80 Å or more. More preferably, the Mg concentration of the surface is 15.0 atom% or more, and the oxide film thickness is 200 Å or more. It is more desirable that the Mg concentration of the surface be 20.0 atom% or more. Here, the Mg concentration of the surface is a Mg concentration of a surface portion extending from the outermost surface to a depth of 8 nm, and the Mg concentration is an amount relative to the total amount of all elements which is defined as 100 atom%.

• Mg concentration of surface: 15.0 atom% or more and oxide film thickness: 120 Å or more (Mg content: more than 1.5 mass% and 5.0 mass% or less)

As described above, while details of the mechanism are not evident, the Mg concentration of the foil surface and the oxide film thickness have been confirmed to influence corrosion resistance to an electrolytic solution of a lithium secondary battery. When the Mg concentration of the foil surface is high, and a thick oxide film, corrosion resistance is improved. Thus, when the Mg content is more than 1.5 mass% or more and 5.0 mass% or less, it is desirable that the Mg concentration of the aluminum foil surface be 15.0 atom% or more and the oxide film thickness be 120 Å or more. More preferably, the Mg concentration of the surface is 20.0 atom% or more, and the oxide film thickness is 220 Å or more. It is more desirable that the Mg concentration of the surface be 25.0 atom% or more.

. $L1/L2 > 3.0$, where L1 is a length of a high-angle grain boundary and L2 is a low-angle grain boundary per unit area as measured by an electron backscatter diffraction method

The ratio between the high-angle grain boundary (HAGB) and the low-angle grain boundary (LAGB) in the recrystallized grain structure after annealing has influences on the elongation and moldability of the foil. By reducing the proportion of LAGB in the recrystallized grain structure after final annealing, localization of deformation suppressed, so that the elongation and moldability are improved. Thus, when the ratio of HAGB is increased to satisfy $L1/L2 > 3.0$, high elongation and good moldability can be expected. More preferably, $L1/L2 > 5.0$.

• Tensile strength: 110 MPa or more and 180 MPa or less (Mg content: 0.1 mass% or more and 1.5 mass% or less)

When the Mg content is 0.1 mass% or more and 1.5 mass% or less, a tensile strength of 110 MPa or more is required for dramatically improving the shock resistance and piercing strength in the existing foils of JIS A 8079, 8021 and the like. The tensile strength is preferably 180 MPa or less.

The tensile strength can be achieved by selecting the composition and optimizing the crystal grain size.

• Tensile strength: 180 MPa or more (Mg content: more than 1.5 mass% and 5.0 mass% or less)

When the Mg content is more than 1.5 mass% and 5.0 mass% or less, a tensile strength of 180 MPa or more is preferable for dramatically improving the shock resistance and piercing strength in the existing foils of JIS A 8079, 8021 and the like. For the same reason, it is desirable that the tensile strength be 200 MPa or more. However, since moldability decreases as the tensile strength increases, it is better to suppress the tensile strength when moldability is considered to be important.

As described above, the tensile strength can be achieved by selecting the composition and optimizing the crystal grain size.

• Breaking elongation: 10% or more (Mg content: 0.1 mass% or more and 1.5 mass% or less)

The influence of the elongation on the moldability significantly varies depending on the molding method, and moldability is not determined only by the elongation. In bulging often used for aluminum packaging materials, higher elongation of the aluminum alloy foil is more advantageous for the moldability, and when the Mg content is 0.1 mass% or more and 1.5 mass% or less, it is desirable to have an elongation of 10% or more.
The elongation property can be achieved by selecting the composition and reducing the crystal grain size.

• Breaking elongation: 15% or more (Mg content: more than 1.5 mass% and 5.0 mass% or less)

As described above, the influence of elongation on the significantly varies depending on the molding method, and the moldability is not determined only by the elongation, but in bulging often used for aluminum packaging materials, higher elongation of the aluminum alloy foil is more advantageous for the moldability, and when the Mg content is more than 1.5 mass% and 5.0 mass% or less, it is desirable to have an elongation of 15% or more.
As described above, the elongation property can be achieved by selecting the composition and reducing the crystal grain size.

• Average crystal grain size: 25 μm or less

When the crystal grains of the soft aluminum alloy foil decrease in size, it is possible to suppress roughness of a foil surface in deformation, and associated high moldability can be expected. The influence of the crystal grain size increases as the thickness of the foil decreases. It is desirable that the average crystal grain size be 25 μm or less for achieving a high elongation property and associated high moldability.
The average crystal grain size can be attained by selection of the composition and manufacturing conditions involving homogenization treatment and optimization of the cold rolling ratio.
Examples of the preferred formulation of the aluminum alloy foil include those satisfying the formulations of the following specific examples 1 and 2.

• Specific example 1

The content of Si is 0.1 mass% or more and 0.5 mass% or less, the content of Fe is 0.2 mass% or more and 2.0 mass% or less, the content of Mg is 0.1 mass% or more and 5.0 mass% or less, the content of Mn is 0.05 mass% or more and 0.1 mass% or less, the content of Cu is 0.0 mass% or more and 0.1 mass% or less, the content of Cr is 0.0 mass% or more and 0.1 mass% or less, the content of Zr is 0.0 mass% or more and 0.1 mass% or less, the content of each of other inevitable impurities is 0.05 mass% or less and the total content of the other inevitable impurities is 0.15 mass% or less, with the balance being Al.

• Specific example 2

It is more preferable that the content of Si is 0.1 mass% or more and 0.5 mass% or less, the content of Fe is 0.2 mass% or more and 2.0 mass% or less, the content of Mg is 0.1 mass% or more and 5.0 mass% or less, the content of Mn is 0.1 mass%, the content of Cu is 0.0 mass%, the content of Cr is 0.0 mass%, the content of Zr is 0.0 mass%, the content of each of other inevitable impurities is 0.05 mass% or less and the total content of the other inevitable impurities is 0.15 mass% or less, with the balance being Al. In the aluminum alloy foil, the content of Si is 0.5 mass% or less, the content of Fe is 0.2 mass% or more and 2.0 mass% or less, the content of Mg is 0.1 mass% or more and 5.0 mass% or less, the content of Mn is 0.1 mass%, the content of Cu is 0.0 mass%, the content of Cr is 0.0 mass%, the content of Zr is 0.0 mass%, the content of each of other inevitable impurities is 0.05 mass% or less and the total content of the other inevitable impurities is 0.15 mass% or less, with the balance being Al.
For dramatically improving shock resistance and piercing strength of existing aluminum alloy foils of JIS A 8079, JIS A 8021 and the like, it is desirable the tensile strength of the aluminum alloy foil be 100 MPa or more, and it is more desirable that the tensile strength of the aluminum alloy foil be 200 MPa or more. It is desirable that the upper limit value of the tensile strength be 350 MPa. It is desirable that the upper limit value of the tensile strength be 200 MPa or more and 350 MPa or less, and it is more desirable that the upper limit value of the tensile strength be 200 MPa or more and 310 MPa or less However, since moldability decreases as the tensile strength increases, it is better to suppress the tensile strength when moldability is considered to be important. From the viewpoint of enhancing the moldability of the exterior material for electrical storage devices, it is preferable that the aluminum alloy foil has a tensile strength of 100 MPa or more and 180 MPa or less as measured for a JIS No. 5 test piece as specified in JIS Z 2241: 2011. Specifically, the tensile strength is measured by a method described in any of examples. The tensile strength of the aluminum alloy

foil can be achieved by selecting the composition and optimizing the crystal grain size.

The effect of elongation on the moldability of the aluminum alloy foil significantly varies depending on the molding method, and moldability is not determined only by the elongation. In bulging of an exterior material using the aluminum alloy foil, the higher the elongation of the aluminum alloy foil, the more advantageous for molding. The aluminum alloy foil has a breaking elongation of preferably 10% or more, more preferably 15% or more, as measured for a JIS No. 5 test piece in accordance with the provisions of JIS Z 2241: 2011. It is desirable that the upper limit of the breaking elongation be 40%, and it is more desirable that the upper limit of the elongation be 30%. In addition, it is desirable that the breaking elongation be 0% or more and 40%, it is more desirable that the elongation be 15% or more and 40%, it is still more desirable that the elongation be 15% or more and 30%. Specifically, the breaking elongation is measured by a method described in any of examples. The elongation property of the aluminum alloy foil can be achieved by selecting the composition and reducing the crystal grain size.

The aluminum alloy foil satisfying the formulation and properties described above can be manufactured by, for example, adjusting the composition on the basis on an aluminum alloy having any of compositions of alloy Nos. A 5000s of JIS H 4000: 2014, and passing through, for example, the steps of melting, homogenization treatment, hot rolling, cold rolling, intermediate annealing, cold rolling, and final annealing as a known method for manufacturing an aluminum alloy foil. For the conditions for manufacturing the aluminum alloy foil, it is possible to refer to, for example, Japanese Patent Laid-open No. 2005-163077. Each chemical component contained in the aluminum alloy foil is analyzed by an analysis test specified in JIS H 4160-1994.

For example, an aluminum alloy ingot formulated to have a Fe content of 0.2 mass% or more and 2.0 mass% or less and a Mg content of 0.1 mass% or more and 5.0 mass% or less is cast by a conventional method such as a semicontinuous method. The obtained alloy ingot is subjected to homogenization treatment at 480 to 540°C for 6 to 12 hours.

Generally, homogenization treatment of an aluminum material is performed at 400 to 600°C for a long time (e.g. about 12 hours), and it is desirable to perform heat treatment at 480 to 540°C for 6 hours or more with consideration given to crystal grain refinement by addition of Fe as in the present disclosure. If the temperature is lower than 480°C, grain refinement is insufficient, and if the temperature exceeds 540°C, the size of crystal grains increases. A treatment time of less than 6 hours leads to insufficient homogenization treatment.

After the homogenization treatment, hot rolling is performed to obtain an aluminum alloy sheet having a desired thickness. The hot rolling can be performed by a conventional method, and it is desirable that the winding temperature in the hot rolling be a temperature equal to or higher than the recrystallization temperature, specifically 300°C or higher. A temperature of lower than 300°C is not desirable because a fine Al-Fe-based intermetallic compound of 0.3 μm or less is precipitated, and recrystallized grains and fiber grains are mixed after hot rolling, so that the crystal grain size after intermediate annealing or final annealing may be non-uniform, leading to deterioration of the elongation property.

After the hot rolling, cold rolling, intermediate annealing and final cold rolling are performed to set the thickness to 5 to 100 μm, thereby obtaining the aluminum alloy foil according to the present disclosure. It is desirable that the final cold rolling ratio be 90% or more.

The intermediate annealing in the middle of the cold rolling is not required to be performed, and may be performed in some cases. There are two types of intermediate annealing. One is batch annealing in which a coil is put into a furnace and held for a certain period of time, and the other is rapid heating and rapid cooling of a material by a continuous annealing line (hereinafter referred to as CAL annealing). When intermediate annealing is added, either of the methods may be used. CAL annealing is desirable when crystal grain refinement is performed to increase the strength, and batch annealing is preferable when priority is given to moldability.

For example, conditions of 300 to 400°C for 3 hours or more can be adopted for batch annealing, and conditions of a temperature rise rate of 10 to 250°C/sec, a heating temperature of 400°C to 550°C, no holding time or a holding time of 5 seconds or less, and a cooling rate of 20 to 200 °C/sec can be adopted for CAL annealing. However, in the present disclosure, the presence or absence of intermediate annealing, the conditions for intermediate annealing when it is performed, and the like are not limited to specific ones.

After foil rolling, final annealing is performed to obtain a soft foil. The final annealing after foil rolling may be generally performed at 250°C to 400°C. However, when the effect of corrosion resistance by Mg is further enhanced, it is desirable to perform holding at a high temperature of 350°C or higher for 5 hours or more.

If the final annealing temperature is low, softening is insufficient, and the concentration of Mg on the foil surface may be insufficient, leading to deterioration of corrosion resistance. If the temperature exceeds 400°C, there is a possibility that Mg is excessively concentrated on the foil surface, so that the foil is discolored, or the properties of the oxide film change, and thus minute cracks are generated, leading to deterioration of corrosion resistance. A final annealing time of less than 5 hours leads to an insufficient effect of final annealing.

Hereinafter, a preferred method for preparing an aluminum alloy foil will be described more specifically.

An aluminum alloy ingot is produced by a conventional method such as a semicontinuous casting method. The aluminum alloy ingot has the composition of a Fe content of 0.2 mass% or more and 2.0 mass% or less and a Mg content

of 0.1 mass% or more and 5.0 mass% or less, a balance containing Al and an inevitable impurity, and a Mn content of 0.1 mass% or less as desired. The obtained alloy ingot is subjected to homogenization treatment at 480 to 540°C for 6 to 12 hours.

• Homogenization treatment: 450 to 550°C

The homogenization treatment is intended to eliminate micro segregation in the ingot and adjust the state of distribution of intermetallic compounds, and is very important for ultimately obtaining a desired crystal grain structure.

Generally, the homogenization treatment of an aluminum material is performed at 400 to 600°C for a long time, but in the present invention, it is necessary to give consideration to refinement of crystal grains by addition of Fe.

In the homogenization treatment, precipitation of Fe may be insufficient at a temperature lower than 450°C, leading to an increase in size of crystal grains during final annealing. The ratio of in-situ recrystallization, and hence the ratio of LAGB may increase, leading to a decrease in L1/L2. The moldability may be deteriorated due to an increase in orientation density in each of Copper orientation and R orientation. At a temperature higher than 550°C, a crystallized product significantly grows, leading to an increase in size of crystal grains during final annealing and deterioration of moldability. It is necessary to secure at least 3 hours as a time for the homogenization treatment. If the homogenization treatment time is less than 3 hours, precipitation is not sufficient, and thus the density of fine intermetallic compounds decreases. Preferably, the temperature is 480 to 520°C and the time is 5 hours or more.

After the homogenization treatment, hot rolling is performed to obtain an aluminum alloy sheet having a desired thickness. The hot rolling can be performed by a conventional method, and it is desirable that the winding temperature in the hot rolling be a temperature equal to or higher than the recrystallization temperature, specifically 300°C or higher. If the winding temperature is lower than 300°C, a fine Al-Fe-based intermetallic compound of 0.3 μm or less is precipitated. Such a temperature is not desirable because recrystallized grains and fiber grains are mixed after hot rolling, so that the crystal grain size after intermediate annealing or final annealing may be non-uniform, leading to deterioration of the elongation property.

After the hot rolling, cold rolling, intermediate annealing and final cold rolling are performed to set the thickness to 5 to 100 μm, thereby obtaining the aluminum alloy foil according to the present invention.

There are two types of intermediate annealing. One is batch annealing in which a coil is put into a furnace and held for a certain period of time, and the other is rapid heating and rapid cooling of a material by a continuous annealing line (hereinafter referred to as CAL annealing). When intermediate annealing is applied, either of the methods may be used. CAL annealing is desirable when crystal grain refinement is performed to increase the strength. However, there is a possibility that the texture is developed after final annealing subsequent to final cold rolling after CAL annealing, the density in each of Copper orientation and R orientation increases, resulting in deterioration of moldability. For this reason, batch annealing is preferable if priority is given to the moldability.

For example, conditions of 300 to 400°C for 3 hours or more can be adopted for batch annealing. Conditions of a temperature rise rate of 10 to 250°C/sec, a heating temperature of 400°C to 550°C, no holding time or a holding time of 5 seconds or less, and a cooling rate of 20 to 200 °C/sec can be adopted for CAL annealing. However, in the present invention, the presence or absence of intermediate annealing, the conditions for intermediate annealing when it is performed, and the like are not limited to specific ones.

• Final cold rolling ratio: 84.0% or more and 97.0% or less

The amount of strain accumulated in the material increases to reduce the size of recrystallized grains after final annealing as the final cold rolling ratio up to a final thickness after intermediate annealing increases. In addition, an effect of suppressing in-situ recrystallization is exhibited, and it is expected to improve the moldability due an increase in L1/L2. Specifically, it is desirable that the final cold rolling ratio be 84.0% or more. However, if the final cold rolling ratio is excessively high, the moldability may be deteriorated due to an increase in orientation density in each of Copper orientation and R orientation even after final annealing. As a result, a decrease in L1/L2 occurs, and therefore, specifically, it is desirable the final cold rolling ratio be 97.0% or less. If the final cold rolling ratio is low, the moldability may be deteriorated due to an increase in size of crystal grains or a decrease in L1/L2. For the same reason, it is further desirable that the final cold rolling ratio be in the range of 90.0% or more and 93.0% or less.

After foil rolling, final annealing is performed to obtain a soft foil. The final annealing after foil rolling may be generally performed at 250°C to 400°C. However, when the effect of corrosion resistance by Mg is enhanced, it is desirable to perform holding at a high temperature of 300°C or higher for 5 hours or more, it is further desirable that the temperature be 350°C to 400°C.

If the final annealing temperature is low, softening may be insufficient, leading to a decrease in L1/L2 or an increase in orientation density in each of Copper orientation and R orientation. In addition, the concentration of Mg on the foil surface and growth of an oxide film may be insufficient, leading to deterioration of corrosion resistance. If the

temperature exceeds 400°C, there is a possibility that Mg is excessively concentrated on the foil surface, so that the foil is discolored, or the properties of the oxide film change, and thus minute cracks are generated, leading to deterioration of corrosion resistance. A final annealing time of less than 5 hours leads to an insufficient effect of final annealing.

At room temperature, the resulting aluminum alloy foil has a tensile strength of 110 MPa or more and 180 MPa or less and a breaking elongation of 10% or more for a Mg content of 0.1 mass% or more and 1.5 mass% or less, and has a tensile strength of 180 MPa or more and a breaking elongation of 15% or more for a Mg content of more than 1.5 mass% and 5.0 mass% or less. The average crystal grain size is 25 μm or less. The average crystal grain size can be determined by a cutting method specified in JIS G0551.

In the present disclosure, when an image of a sample is observed with an accuracy of up to 0.1 μm in terms of a diameter at a magnification appropriate to a grain size with a scanning electron microscope in a cross-section of an aluminum alloy foil (barrier layer 3), which is defined by a machine direction and a thickness direction, and for arbitrary 100 second phase grains 3b in the visual field of the analyzed image, the straight-line distance between the leftmost end of each second phase grain 3b in a direction perpendicular to the thickness direction and the rightmost end of the second phase grain 3b in a direction perpendicular to the thickness direction is defined as a diameter y as shown in the schematic diagram of Fig. 7, the average of diameters y of top 20 second phase grains 3b having the largest diameters y is preferably 10.0 μm or less. Consequently, although the aluminum alloy foil is a very thin aluminum alloy foil having a thickness of, for example, about 85 μm or less, further about 50 μm or less, further about 40 μm or less, pinholes and cracks are hardly generated when the aluminum alloy foil is laminated on the exterior material for electrical storage devices, and molded, and excellent moldability can be imparted to the exterior material for electrical storage devices. Further, in the present disclosure, since the average of the diameters y of the second phase grains 3b in the aluminum alloy foil (barrier layer 3) is 10.0 μm or less, pinholes and cracks are hardly generated during molding and the exterior material for electrical storage devices has excellent moldability even when the thickness of the aluminum alloy foil is, for example, about 85 μm or less, further about 50 μm or less, further about 40 μm or less, and the total thickness of the exterior material for electrical storage devices is as small as, for example, the above-described thickness.

From the viewpoint of further enhancing moldability, the average of the diameters y is more preferably about 1.0 to 8.0 μm, still more preferably about 1.0 to 6.0 μm. Since Fig. 7 is a schematic diagram, the drawing is not fully shown, and the number of second phase grains 3b shown is less than 100.

In the present disclosure, the second phase grain contained in the aluminum alloy foil refers to an intermetallic compound grain present in the aluminum alloy, and is a crystallized phase divided by rolling or a precipitated phase grain precipitated when homogenization treatment or annealing is performed.

When a cross-section of the aluminum alloy foil, which is defined by the machine direction and the thickness direction, is observed with a scanning electron microscope (SEM), a crystal grain normally draws a boundary line at which it contacts a plurality of crystals. On the other hand, the second phase grain is a crystal with a single boundary line. In addition, the crystal grain and the second phase grain have different phases, and therefore have different colors on the SEM image. Further, when a cross-section of an aluminum alloy foil layer, which is defined by the machine direction and the thickness direction, is observed with a scanning electron microscope, the observation is easy because only the second phase grains look black due to a difference in phase between the crystal grains and the second phase grains.

From the viewpoint of further enhancing moldability, the average crystal grain size in the aluminum alloy foil is preferably 25.0 μm or less, more preferably 20.0 μm or less, still more preferably 10.0 μm or less, and is preferably 1.0 μm or more or 3.0 μm or more, more preferably 9.0 μm or more. The average crystal grain size is preferably in the range of about 1.0 to 25.0 μm, about 1.0 to 20.0 μm, about 1.0 to 10.0 μm, about 3.0 to 25.0 μm, about 3.0 to 20.0 μm, about 3.0 to 10.0 μm, about 9.0 to 25.0 μm, about 9.0 to 20.0 μm, about 9.0 to 10.0 μm. Since the average crystal grain size in the aluminum alloy foil is 25.0 μm or less and the diameter y of the second phase grain 3b is the above-described value, the moldability of the later-described exterior material for electrical storage devices can be further enhanced.

In the present disclosure, when a thickness-direction cross-section of the aluminum alloy foil is observed with a scanning electron microscope (SEM), and for 100 crystal grains 3a located within the visual field, the straight-line distance between the leftmost end of each crystal grain in a direction perpendicular to a thickness direction and the rightmost end of the crystal grain in a direction perpendicular to the thickness direction is defined as a maximum diameter x as shown in the schematic diagram of Fig. 7, the average crystal grain size in the aluminum alloy foil means an average value of the maximum diameters x of the 100 crystal grains. Since Fig. 7 is a schematic diagram, the drawing is not fully shown, and the number of crystal grains 3a shown is less than 100.

The thickness of the aluminum alloy foil may exhibit at least a function as a barrier layer for suppressing ingress of moisture in the exterior material for electrical storage devices. The lower limit and the upper limit of the thickness of the aluminum alloy foil are about 9 μm or more and about 200 μm or less, respectively. For example, from the viewpoint of reducing the thickness of the exterior material for electrical storage devices, the thickness of the aluminum alloy foil is preferably about 85 μm or less, more preferably about 50 μm or less, still more preferably about 45 μm or less, especially preferably about 40 μm or less for the upper limit, and preferably about 10 μm or more, more preferably about

20 $\mu$m or more, still more preferably about 25 $\mu$m or more for the lower limit, and is preferably in the range of about 10 to 85 $\mu$m, about 10 to 50 $\mu$m, about 10 to 45 $\mu$m, about 10 to 40 $\mu$m, about 20 to 85 $\mu$m, about 20 to 50 $\mu$m, about 20 to 45 $\mu$m, about 20 to 40 $\mu$m, about 25 to 85 $\mu$m, about 25 to 50 $\mu$m, about 25 to 45 $\mu$m, or about 25 to 40 $\mu$m.

In addition, for suppression of dissolution and corrosion of the aluminum alloy foil, and the like, it is preferable that a corrosion resistance film is provided on at least one surface of the aluminum alloy foil. The aluminum alloy foil may include a corrosion-resistant film on each of both surfaces. Here, the corrosion-resistant film refers to a thin film obtained by subjecting the surface of the aluminum alloy foil to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance to the aluminum alloy foil. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the aluminum alloy foil is provided with the corrosion-resistant film, the aluminum alloy foil is regarded as including the corrosion-resistant film.

The corrosion-resistant film exhibits the effects of preventing delamination between the aluminum alloy foil and the base material layer during molding of the exterior material for electrical storage devices; preventing dissolution and corrosion of the surface of the aluminum alloy foil, dissolution and corrosion of aluminum oxide present on the surface of the aluminum alloy foil, by hydrogen fluoride generated by reaction of an electrolyte with moisture; improving the bondability (wettability) of the surface of the aluminum alloy foil; preventing delamination between the base material layer and the aluminum alloy foil during heat-sealing; and preventing delamination between the base material layer and the aluminum alloy foil during molding.

Various corrosion-resistant films formed by chemical conversion treatment are known, and examples thereof include mainly corrosion-resistant films containing at least one of a phosphate, a chromate, a fluoride, a triazine thiol compound, and a rare earth oxide. Examples of the chemical conversion treatment using a phosphate or a chromate include chromic acid chromate treatment, phosphoric acid chromate treatment, phosphoric acid-chromate treatment and chromate treatment, and examples of the chromium compound used in these treatments include chromium nitrate, chromium fluoride, chromium sulfate, chromium acetate, chromium oxalate, chromium biphosphate, acetylacetate chromate, chromium chloride and chromium potassium sulfate. Examples of the phosphorus compound used in these treatments include sodium phosphate, potassium phosphate, ammonium phosphate and polyphosphoric acid. Examples of the chromate treatment include etching chromate treatment, electrolytic chromate treatment and coating-type chromate treatment, and coating-type chromate treatment is preferable. This coating-type chromate treatment is treatment in which at least a surface of the barrier layer (e.g. an aluminum alloy foil) on the inner layer side is first degreased by a well-known treatment method such as an alkali immersion method, an electrolytic cleaning method, an acid cleaning method, an electrolytic acid cleaning method or an acid activation method, and a treatment solution containing a metal phosphate such as Cr (chromium) phosphate, Ti (titanium) phosphate, Zr (zirconium) phosphate or Zn (zinc) phosphate or a mixture of these metal salts as a main component, a treatment solution containing any of non-metal salts of phosphoric acid and a mixture of these non-metal salts as a main component, or a treatment solution formed of a mixture of any of these salts and a synthetic resin or the like is then applied to the degreased surface by a well-known coating method such as a roll coating method, a gravure printing method or an immersion method, and dried. As the treatment liquid, for example, various solvents such as water, an alcohol-based solvent, a hydrocarbon-based solvent, a ketone-based solvent, an ester-based solvent, and an ether-based solvent can be used, and water is preferable. Examples of the resin component used here include polymers such as phenol-based resins and acryl-based resins, and examples of the treatment include chromate treatment using an aminated phenol polymer having any of repeating units represented by the following general formulae (1) to (4). In the aminated phenol polymer, the repeating units represented by the following general formulae (1) to (4) may be contained alone, or may be contained in combination of two or more thereof. The acryl-based resin is preferably polyacrylic acid, an acrylic acid-methacrylic acid ester copolymer, an acrylic acid-maleic acid copolymer, an acrylic acid-styrene copolymer, or a derivative thereof such as a sodium salt, an ammonium salt or an amine salt thereof. In particular, a derivative of polyacrylic acid such as an ammonium salt, a sodium salt or an amine salt of polyacrylic acid is preferable. In the present disclosure, the polyacrylic acid means a polymer of acrylic acid. The acryl-based resin is also preferably a copolymer of acrylic acid and dicarboxylic acid or dicarboxylic anhydride, and is also preferably an ammonium salt, a sodium salt or an amine salt of a copolymer of acrylic acid and dicarboxylic acid or dicarboxylic anhydride. The acryl-based resins may be used alone, or may be used in combination of two or more thereof.

[Chemical Formula 1]

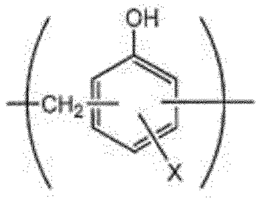

(1)

[Chemical Formula 2]

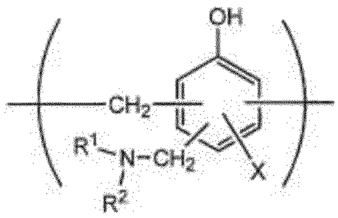

(2)

[Chemical Formula 3]

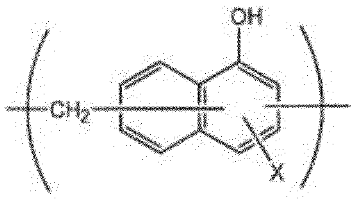

(3)

[Chemical Formula 4]

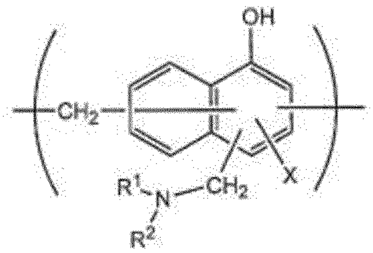

(4)

In the general formulae (1) to (4), X represents a hydrogen atom, a hydroxy group, an alkyl group, a hydroxyalkyl group, an allyl group, or a benzyl group. $R^1$ and $R^2$ are the same or different, and each represents a hydroxy group, an alkyl group, or a hydroxyalkyl group. In the general formulae (1) to (4), examples of the alkyl group represented by X, $R^1$ and $R^2$ include linear or branched alkyl groups with a carbon number of 1 to 4, such as a methyl group, an ethyl group, an n-propyl group, an isopropyl group, an n-butyl group, an isobutyl group, and a tert-butyl group. Examples of the hydroxyalkyl group represented by X, $R^1$ and $R^2$ include linear or branched alkyl groups with a carbon number of 1 to 4, which is substituted with one hydroxy group, such as a hydroxymethyl group, a 1-hydroxyethyl group, a 2-hydroxyethyl group, a 1-hydroxypropyl group, a 2-hydroxypropyl group, a 3-hydroxypropyl group, a 1-hydroxybutyl group, a 2-hydroxybutyl group, a 3-hydroxybutyl group, and a 4-hydroxybutyl group. In the general formulae (1) to (4), the alkyl group and the hydroxyalkyl group represented by X, $R^1$ and $R^2$ may be the same or different. In the general formulae (1) to (4), X is preferably a hydrogen atom, a hydroxy group or a hydroxyalkyl group. A number average molecular weight of the aminated phenol polymer having repeating units represented by the general formulae (1) to (4) is preferably about 500 to 1,000,000, and more preferably about 1,000 to 20,000, for example. The aminated phenol polymer is produced by, for example, performing polycondensation of a phenol compound or a naphthol compound with formaldehyde to

prepare a polymer including repeating units represented by the general formula (1) or the general formula (3), and then introducing a functional group ($-CH_2NR^1R^2$) into the obtained polymer using formaldehyde and an amine ($R^1R^2NH$). The aminated phenol polymers are used alone, or used in combination of two or more thereof.

Other examples of the corrosion-resistant film include thin films formed by corrosion prevention treatment of coating type in which a coating agent containing at least one selected from the group consisting of a rare earth element oxide sol, an anionic polymer and a cationic polymer is applied. The coating agent may further contain phosphoric acid or a phosphate, and a crosslinker for crosslinking the polymer. In the rare earth element oxide sol, fine particles of a rare earth element oxide (e.g. particles having an average particle diameter of 100 nm or less) are dispersed in a liquid dispersion medium. Examples of the rare earth element oxide include cerium oxide, yttrium oxide, neodymium oxide and lanthanum oxide, and cerium oxide is preferable from the viewpoint of further improving adhesion. The rare earth element oxides contained in the corrosion-resistant film can be used alone, or used in combination of two or more thereof. As the liquid dispersion medium for the rare earth element oxide, for example, various solvents such as water, an alcohol-based solvent, a hydrocarbon-based solvent, a ketone-based solvent, an ester-based solvent, and an ether-based solvent can be used, and water is preferable. For example, the cationic polymer is preferably polyethyleneimine, an ion polymer complex formed of a polymer having polyethyleneimine and a carboxylic acid, primary amine-grafted acrylic resins obtained by graft-polymerizing a primary amine with an acrylic main backbone, polyallylamine or a derivative thereof, or aminated phenol. The anionic polymer is preferably poly (meth)acrylic acid or a salt thereof, or a copolymer containing (meth)acrylic acid or a salt thereof as a main component. The crosslinker is preferably at least one selected from the group consisting of a silane coupling agent and a compound having any of functional groups including an isocyanate group, a glycidyl group, a carboxyl group and an oxazoline group. In addition, the phosphoric acid or phosphate is preferably condensed phosphoric acid or a condensed phosphate.

Examples of the corrosion-resistant film include films formed by applying a dispersion of fine particles of a metal oxide such as aluminum oxide, titanium oxide, cerium oxide or tin oxide or barium sulfate in phosphoric acid to the surface of the barrier layer and performing baking treatment at 150°C or higher.

The corrosion-resistant film may have a laminated structure in which at least one of a cationic polymer and an anionic polymer is further laminated if necessary. Examples of the cationic polymer and the anionic polymer include those described above.

The composition of the corrosion-resistant film can be analyzed by, for example, time-of-flight secondary ion mass spectrometry.

The amount of the corrosion-resistant film to be formed on the surface of the aluminum alloy foil in the chemical conversion treatment is not particularly limited, but for example when the coating-type chromate treatment is performed, and it is desirable that the chromic acid compound be contained in an amount of, for example, about 0.5 to 50 mg, preferably about 1.0 to 40 mg, in terms of chromium, the phosphorus compound be contained in an amount of, for example, about 0.5 to 50 mg, preferably about 1.0 to 40 mg, in terms of phosphorus, and the aminated phenol polymer be contained in an amount of, for example, about 1.0 to 200 mg, preferably about 5.0 to 150 mg, per 1 $m^2$ of the surface of the aluminum alloy foil.

The thickness of the corrosion-resistant film is not particularly limited, and is preferably about 1 nm to 20 $\mu$m, more preferably about 1 nm to 100 nm, still more preferably about 1 nm to 50 nm from the viewpoint of the cohesive force of the film and the adhesive strength with the barrier layer and the heat-sealable resin layer. The thickness of the corrosion-resistant film can be measured by observation with a transmission electron microscope or a combination of observation with a transmission electron microscope and energy dispersive X-ray spectroscopy or electron beam energy loss spectroscopy. By analyzing the composition of the corrosion-resistant film using time-of-flight secondary ion mass spectrometry, peaks derived from secondary ions from, for example, Ce, P and O (e.g. at least one of $Ce_2PO_4^+$, $CePO_4^-$ and the like) and secondary ions from, for example, Cr, P and O (e.g. at least one of $CrPO_2^+$, $CrPO_4^-$ and the like) are detected.

The chemical conversion treatment is performed in the following manner: a solution containing a compound to be used for formation of a corrosion-resistant film is applied to the surface of the aluminum alloy foil by a bar coating method, a roll coating method, a gravure coating method, an immersion method or the like, and heating is then performed so that the temperature of the aluminum alloy foil is about 70 to about 200°C. The aluminum alloy foil may be subjected to a degreasing treatment by an alkali immersion method, an electrolytic cleaning method, an acid cleaning method, an electrolytic acid cleaning method or the like before the aluminum alloy foil is subjected to a chemical conversion treatment. When a degreasing treatment is performed as described above, the chemical conversion treatment of the surface of the aluminum alloy foil can be further efficiently performed. When an acid degreasing agent with a fluorine-containing compound dissolved in an inorganic acid is used for degreasing treatment, not only a metal foil degreasing effect can be obtained but also a metal fluoride can be formed as a passive state, and in this case, only degreasing treatment may be performed.

[Heat-sealable resin layer 4]

In the exterior material for electrical storage devices according to the present disclosure, the heat-sealable resin layer 4 is a layer (sealant layer) which is located on the inner layer side and performs a function of hermetically sealing the electrical storage device element by heat-sealing the heat-sealable resin layer during construction of the electrical storage device. In the exterior material 10 for electrical storage devices according to the present disclosure, the heat-sealable resin layer 4 is composed of a single layer or multiple layers, and a first heat-sealable resin layer 41 of the heat-sealable resin layer 4 forms a surface of the laminate. Therefore, during construction of the electrical storage device, the first heat-sealable resin layer 41 is heat-sealed to hermetically seal the electrical storage device element.

When the heat-sealable resin layer 4 is composed of a single layer, the heat-sealable resin layer 4 forms the first heat-sealable resin layer 41. Fig. 1 and Fig. 2 show a laminated configuration in which the heat-sealable resin layer 4 is composed of a single layer that is the first heat-sealable resin layer 41, and the first heat-sealable resin layer 41 forms a surface of the laminate.

When the heat-sealable resin layer 4 includes multiple layers, at least the first heat-sealable resin layer 41 and the second heat-sealable resin layer 42 are provided in this order from the surface side of the laminate forming the exterior material 10 for electrical storage devices. Fig. 3 to Fig. 5 show a laminated configuration in which the heat-sealable resin layer 4 includes multiple layers (two layers) including the first heat-sealable resin layer 41 and the second heat-sealable resin layer 42, and the first heat-sealable resin layer 41 forms a surface of the laminate.

When the heat-sealable resin layer 4 includes multiple layers, the heat-sealable resin layer 4 may further include a third heat-sealable resin layer, a fourth heat-sealable resin layer and the like on the barrier layer 3 side of the second heat-sealable resin layer 42 in addition to the first heat-sealable resin layer 41 and the second heat-sealable resin layer 42. When the heat-sealable resin layer 4 includes multiple layers, it is preferable that the heat-sealable resin layer 4 includes two layers including the first heat-sealable resin layer 41 and the second heat-sealable resin layer 42.

In the exterior material for electrical storage devices according to the present disclosure, the logarithmic decrement ΔE of the first heat-sealable resin layer 41 is 0.25 or less at 140°C in measurement with a rigid pendulum. In the present disclosure, the logarithmic decrement ΔE at 140°C is 0.25 or less, so that crushing in heat-sealing of the first heat-sealable resin layer 41 is effectively suppressed, and in synergy with the barrier layer (aluminum alloy foil), the insulation quality of the exterior material for electrical storage devices can be improved.

The logarithmic decrement at 140°C in measurement with a rigid pendulum is an index indicating the hardness of the resin in a high-temperature environment at 140°C. The smaller the logarithmic decrement, the higher the hardness of the resin. The temperature at which the heat-sealable resin layer is heat-sealed is high, and in a heat-sealed portion formed by heat-sealing the heat-sealable resin layer, the heat-sealable resin layer may protrude to a large extent to the inner side of the heat-sealed portion (the side of a space in which the electrical storage device element is stored). If the heat-sealable resin layer 4 protrudes to a large extent to the inner side of the heat-sealed portion, cracks are generated in the heat-sealable resin layer 4 with the protruding portion (a so-called polymer sump) as an origination point, so that insulation quality is easily deteriorated. Fig. 11 is a schematic sectional diagram in which a protruding portion A is formed on the inner side of the heat-sealed portion of the heat-sealable resin layer 4. As shown in the sectional diagram, end points A1 and A2 are present in the protruding portion A, and these end points A1 and A2 are likely to be origination points of cracks because of their structure. Therefore, if the heat-sealable resin layer 4 protrudes to a large extent to the inner side of the heat-sealed portion, so that a protruding portion is formed, deterioration of insulation quality by cracks easily occurs. Thus, it is important to control the shape of the heat-sealable part, and for this purpose, the hardness of the heat-sealable resin layer at a high temperature is important. Thus, in the present invention, a logarithmic decrement at a high temperature of 140°C is adopted. In the rigid pendulum measurement, the attenuation rate of the pendulum at the time of increasing the resin temperature from a low temperature to a high temperature is measured. In the rigid pendulum measurement, generally, an edge portion is brought into contact with a surface of an object to be measured, and a pendulum motion is performed in a horizontal direction to apply vibrations to the object to be measured. In the exterior material for electrical storage devices according to the present invention, the hard first heat-sealable resin layer 41 having a logarithmic decrement of 0.25 or less in a high-temperature environment at 140°C is disposed on the surface of the exterior material for electrical storage devices to suppress crushing (thinning) of the first heat-sealable resin layer 41 during heat-sealing of the exterior material for electrical storage devices. Suppression of crushing of the first heat-sealable resin layer 41 inhibits the heat-sealable resin layer from protruding to a large extent to the inner side of the heat-sealable portion formed by heat-sealing the heat-sealable resin layer, so that deterioration of the insulation quality of the exterior material for electrical storage devices due to heat-sealing is effectively suppressed.

The logarithmic decrement ΔE is calculated in accordance with the following expression.

$$\Delta E = [\ln(A1/A2) + \ln(A2/A3) + \cdots \ln(An/An+1)]/n$$

A: amplitude
n: wavenumber

In the exterior material for electrical storage devices according to the present invention, the logarithmic decrement ΔE at 140°C is preferably about 0.10 or more, more preferably about 0.11 or more, still more preferably about 0.12 or more, and preferably about 0.20 or less, more preferably about 0.18 or less, still more preferably about 0.15 or less, still more preferably 0.13 or less, and is preferably in the range of about 0.10 to 0.25, about 0.10 to 0.20, about 0.10 to 0.18, about 0.10 to 0.15, about 0.10 to 0.13, about 0.11 to 0.25, about 0.11 to 0.20, about 0.11 to 0.18, about 0.11 to 0.15, about 0.11 to 0.13, about 0.12 to 0.25, about 0.12 to 0.20, about 0.12 to 0.18, about 0.12 to 0.15 or about 0.12 to 0.13, from the viewpoint of effectively suppressing crushing of the first heat-sealable resin layer 41 in heat-sealing of the first heat-sealable resin layer 41, and improving insulation quality.
The logarithmic decrement ΔE of the first heat-sealable resin layer 41 can be adjusted by, for example, the melt mass flow rate (MFR), the molecular weight, the melting point, the softening point, the molecular weight distribution, the degree of crystallinity and the like of the resin forming the first heat-sealable resin layer 41.
In the measurement of the logarithmic decrement ΔE, a rigid pendulum physical property test is conducted on the first heat-sealable resin layer 41 with a commercially available rigid pendulum type physical property tester under the following conditions: a cylindrical cylinder edge is used as an edge portion to be pressed against the first heat-sealable resin layer 41, the initial amplitude is 0.3 degrees, and the temperature is elevated from 30°C to 200°C at a temperature elevation rate of 3°C/min. On the basis of the logarithmic decrement at 140°C, criteria for suppression of crushing which is exhibited by the first heat-sealable resin layer 41 as described later is determined. For the first heat-sealable resin layer 41 whose logarithmic decrement ΔE is measured, a sample obtained by immersing the exterior material for electrical storage devices in 15% hydrochloric acid to dissolve the base material layer and the barrier layer is sufficiently dried, and used as an object to be measured. When the exterior material for electrical storage devices includes the later-described adhesive layer 5, a laminate of the adhesive layer 5 and the heat-sealable resin layer 4 is used as a sample.
It is also possible to obtain the exterior material for electrical storage devices from the electrical storage device and measure the logarithmic decrement ΔE of the first heat-sealable resin layer 41. When the exterior material for electrical storage devices is obtained from the electrical storage device and the logarithmic decrement ΔE of the first heat-sealable resin layer 41 is measured, a sample is cut out from a top surface portion where the exterior material for electrical storage devices is not extended by molding, and the sample is used as an object to be measured.
In the exterior material for electrical storage devices according to the present invention, the residual ratio of the total thickness of two first heat-sealable resin layers 41 after the heat-sealable resin layers of the laminate forming the exterior material for electrical storage devices are opposed to each other and heated and pressed in a laminating direction under the conditions of a temperature of 190°C, a surface pressure of 2.0 MPa and a time of 3 seconds is preferably about 30% or more, about 32% or more or about 34% or more, and is preferably in the range of 30 to 60%, 32 to 60%, 34 to 60%, 30 to 50%, 32 to 50%, or 34 to 50%. The upper limit of the residual ratio of the thickness is, for example, about 60% or about 50%. The residual ratio of the thickness is a value obtained by performing measurement in accordance with the following method. For setting the residual ratio of the thickness, for example, the type, composition, molecular weight and the like of the resin forming the first heat-sealable resin layer 41 are adjusted.

<Measurement of residual ratio of thickness of first heat-sealable resin layer>

The exterior material for electrical storage devices is cut to 150 mm (length) × 60 mm (width) to prepare a test sample. Next, the first heat-sealable resin layers 41 of the test sample are opposed to each other. Next, in this state, the test sample is heated and pressed from both sides in the lamination direction under the conditions of a temperature of 190°C, a surface pressure of 0.5 MPa, and a time of 3 seconds with the use of a 7 mm-wide metal plate to heat-seal the first heat-sealable resin layer 41. Next, the heat-sealed portion of the test sample is cut in the lamination direction using a microtome, and the total thickness of the two first heat-sealable resin layers 41 heat-sealed to each other is measured at the exposed cross-section. Similarly, the test sample before heat-sealing is cut in the lamination direction using a microtome, and the thickness of the two first heat-sealable resin layers 41 is measured at the exposed cross section. The ratio of the total thickness of the two first heat-sealable resin layers 41 after heat-sealing to the total thickness of the two first heat-sealable resin layers 41 before heat-sealing is calculated, and the residual ratio (%) of the total thickness of the two first heat-sealable resin layers 41 is measured. The thicknesses of the two first heat-sealable resin layers 41 at the heat-sealed portion are measured at a position where the thickness of the exterior material for electrical storage devices is constant.
It is also possible to obtain the exterior material for electrical storage devices from the electrical storage device and measure the residual ratio of the total thickness of the two first heat-sealable resin layers 41. When the exterior material for electrical storage devices is obtained from the electrical storage device and the residual ratio of the total

thickness of the two first heat-sealable resin layer 41 is measured, a sample is cut out from a top surface portion where the exterior material for electrical storage devices is not extended by molding, and the sample is used as an object to be measured.

The resin forming the first heat-sealable resin layer 41 is not particularly limited as long as it can be heat-sealed and the logarithmic decrement ΔE of the first heat-sealable resin layer 41 is 0.25 or less.

The resin forming the first heat-sealable resin layer 41 is preferably a resin containing a polyolefin backbone, such as a polyolefin or an acid-modified polyolefin. The first resin forming the heat-sealable resin layer 41 can be confirmed to contain a polyolefin backbone by an analysis method such as infrared spectroscopy or gas chromatography mass spectrometry. In addition, it is preferable that a peak derived from maleic anhydride is detected when the resin forming the first heat-sealable resin layer 41 is analyzed by infrared spectroscopy. For example, when a maleic anhydride-modified polyolefin is measured by infrared spectroscopy, peaks derived from maleic anhydride are detected near wavenumbers of 1760 $cm^{-1}$ and 1780 $cm^{-1}$. When the first heat-sealable resin layer 41 is a layer formed of a maleic anhydride-modified polyolefin, a peak derived from maleic anhydride is detected when measurement is performed by infrared spectroscopy. However, if the degree of acid modification is low, the peaks may be too small to be detected. In that case, the peaks can be analyzed by nuclear magnetic resonance spectroscopy.

Specific examples of the polyolefin to be acid-modified include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-α-olefin copolymers; and terpolymers of ethylene-butene-propylene. Of these, polypropylene is preferable. The polyolefin resin in the case of a copolymer may be a block copolymer or a random copolymer. These polyolefin-based resins may be used alone, or may be used in combination of two or more thereof.

The polyolefin may be a cyclic polyolefin. The cyclic polyolefin is a copolymer of an olefin and a cyclic monomer, and examples of the olefin as a constituent monomer of the cyclic polyolefin include ethylene, propylene, 4-methyl-1-pentene, styrene, butadiene and isoprene. Examples of the cyclic monomer as a constituent monomer of the cyclic polyolefin include cyclic alkenes such as norbornene; cyclic dienes such as cyclopentadiene, dicyclopentadiene, cyclohexadiene and norbornadiene. Among these polyolefins, cyclic alkenes are preferable, and norbornene is more preferable.

The acid-modified polyolefin is a polymer with the polyolefin modified by subjecting the polyolefin to block polymerization or graft polymerization with an acid component. As the polyolefin to be acid-modified, the above-mentioned polyolefins, copolymers obtained by copolymerizing polar molecules such as acrylic acid or methacrylic acid with the above-mentioned polyolefins, polymers such as crosslinked polyolefins, or the like can also be used. Examples of the acid component to be used for acid modification include carboxylic acids such as maleic acid, acrylic acid, itaconic acid, crotonic acid, maleic anhydride and itaconic anhydride, and anhydrides thereof.

The acid-modified polyolefin may be an acid-modified cyclic polyolefin. The acid-modified cyclic polyolefin is a polymer obtained by copolymerizing a part of monomers forming the cyclic polyolefin in place of an acid component, or block-polymerizing or graft-polymerizing an acid component with the cyclic polyolefin. The cyclic polyolefin to be modified with an acid is the same as described above. The acid component to be used for acid modification is the same as the acid component used for modification of the polyolefin.

Examples of preferred acid-modified polyolefins include polyolefins modified with a carboxylic acid or an anhydride thereof, polypropylene modified with a carboxylic acid or an anhydride thereof, maleic anhydride-modified polyolefins, and maleic anhydride-modified polypropylene.

The first heat-sealable resin layer 41 may be formed from one resin alone, or may be formed from a blend polymer obtained by combining two or more resins.

Preferably, the first heat-sealable resin layer 41 forming the surface contains a polyolefin. For example, in the exterior material 10 for electrical storage devices according to the present disclosure, it is preferable that the first heat-sealable resin layer 41 forming the surface contains a polyolefin and the second heat-sealable resin layer 42 contains an acid-modified polyolefin when the heat-sealable resin layer 4 includes the first heat-sealable resin layer 41 and the second heat-sealable resin layer 42. When the exterior material 10 for electrical storage devices according to the present disclosure contains the adhesive layer 5, it is preferable that the first heat-sealable resin layer 41 forming the surface contains a polyolefin and the adhesive layer 5 contains an acid-modified polyolefin. Preferably, the adhesive layer 5 contains an acid-modified polyolefin, the first heat-sealable resin layer contains a polyolefin, and the second heat-sealable resin layer contains a polyolefin. More preferably, the adhesive layer 5 contains an acid-modified polypropylene, the first heat-sealable resin layer contains polypropylene, and the second heat-sealable resin layer contains polypropylene.

The first heat-sealable resin layer 41 may contain a slipping agent and the like if necessary. When the first heat-sealable resin layer 41 contains a slipping agent, the moldability of the exterior material for electrical storage devices can be improved. The slipping agent is not particularly limited, and a known slipping agent can be used. The slipping agent may be used alone, or may be used in combination of two or more thereof.

The slipping agent is not particularly limited, and is preferably an amide-based slipping agent. Specific examples of the slipping agent include those exemplified for the base material layer 1. The slipping agents may be used alone, or may be used in combination of two or more thereof.

When a slipping agent is present on the surface of the first heat-sealable resin layer 41, the amount of the slipping agent present is not particularly limited, and is preferably about 10 to 50 mg/m$^2$, more preferably about 15 to 40 mg/m$^2$ from the viewpoint of improving the moldability of the exterior material for electrical storage devices. When a slipping agent is present on the surface of the first heat-sealable resin layer 41, the first heat-sealable resin layer 41 forms the surface of the exterior material 10 for electrical storage devices for an electric storage device together with the lubricant.

The lubricant present on the surface of the first heat-sealable resin layer 41 may be one obtained by exuding the lubricant contained in the resin forming the first heat-sealable resin layer 41, or one obtained by applying a slipping agent to the surface of the first heat-sealable resin layer 41.

The thickness of the first heat-sealable resin layer 41 is not particularly limited as long as the heat-sealable resin layer exhibits a function of being heat-sealed to hermetically seal the electrical storage device element.

The thickness of the first heat-sealable resin layer 41 is preferably about 100 μm or less, about 85 μm or less, or about 60 μm or less, and 5 μm or more, 10 μm or more, 20 μm or more, 30 μm or more, or 40 μm or more, and is preferably in the range of about 5 to 100 μm, about 5 to 85 μm, about 5 to 60 μm, about 10 to 100 μm, about 10 to 85 μm, about 10 to 60 μm, about 20 to 100 μm, about 20 to 85 μm, about 20 to 60 μm, about 30 to 100 μm, about 30 to 85 μm, about 30 to 60 μm, about 40 to 100 μm, about 40 to 85 μm, or about 40 to 60 μm, from the viewpoint of effectively suppressing crushing in heat-sealing of the first heat-sealable resin layer 41, and improving insulation quality.

Specifically, when the heat-sealable resin layer 4 is composed of a single layer that is the first heat-sealable resin layer 41, the thickness of the first heat-sealable resin layer 41 is preferably about 100 μm or less, about 85 μm or less, about 60 μm or less, or about 25 μm or less, and 5 μm or more, 10 μm or more, 20 μm or more, 30 μm or more, or 40 μm or more, and is preferably in the range of about 5 to 100 μm, about 5 to 85 μm, about 5 to 60 μm, about 5 to 25 μm, about 10 to 100 μm, about 10 to 85 μm, about 10 to 60 μm, about 10 to 25 μm, about 20 to 100 μm, about 20 to 85 μm, about 20 to 60 μm, about 20 to 25 μm, about 30 to 100 μm, about 30 to 85 μm, about 30 to 60 μm, about 40 to 100 μm, about 40 to 85 μm, or about 40 to 60 μm, from the viewpoint of effectively suppressing crushing in heat-sealing of the first heat-sealable resin layer 41, and improving insulation quality.

When the heat-sealable resin layer 4 includes the first heat-sealable resin layer 41 and the second heat-sealable resin layer 42, the thickness of the first heat-sealable resin layer 41 is preferably about 85 μm or less, about 60 μm or less, or about 25 μm or less, and 5 μm or more, 10 μm or more, 20 μm or more, 30 μm or more, or 40 μm or more, and is preferably in the range of about 5 to 85 μm, about 5 to 60 μm, about 5 to 25 μm, about 10 to 85 μm, about 10 to 60 μm, about 10 to 25 μm, about 20 to 85 μm, about 20 to 60 μm, about 20 to 25 μm, about 30 to 85 μm, about 30 to 60 μm, about 40 to 85 μm, or about 40 to 60 μm, from the viewpoint of effectively suppressing crushing in heat-sealing of the first heat-sealable resin layer 41, improving insulation quality, and improving the sealing property of the exterior material for electrical storage devices.

When the heat-sealable resin layer 4 includes the second heat-sealable resin layer 42, the resin forming the second heat-sealable resin layer 42 is preferably a resin containing a polyolefin backbone, such as a polyolefin or an acid-modified polyolefin. These resins are the same as the resins described for the first heat-sealable resin layer 41. The resin forming the second heat-sealable resin layer 42 can be confirmed to contain a polyolefin backbone by an analysis method such as infrared spectroscopy or gas chromatography mass spectrometry, and the analysis method is not particularly limited. In addition, it is preferable that a peak derived from maleic anhydride is detected when the resin forming the second heat-sealable resin layer 42 is analyzed by infrared spectroscopy. For example, when a maleic anhydride-modified polyolefin is measured by infrared spectroscopy, peaks derived from maleic anhydride are detected near wavenumbers of 1760 cm$^{-1}$ and 1780 cm$^{-1}$. When the second heat-sealable resin layer 42 is a layer formed of a maleic anhydride-modified polyolefin, a peak derived from maleic anhydride is detected when measurement is performed by infrared spectroscopy. However, if the degree of acid modification is low, the peaks may be too small to be detected. In that case, the peaks can be analyzed by nuclear magnetic resonance spectroscopy.

Preferably, the second heat-sealable resin layer 42 contains a polyolefin. In particular, when the heat-sealable resin layer 4 includes the first heat-sealable resin layer 41 and the second heat-sealable resin layer 42, and includes the later-described adhesive layer 5, it is preferable that the second heat-sealable resin layer 42 contains polyolefin. As described above, in the exterior material 10 for electrical storage devices according to the present disclosure, it is preferable that the first heat-sealable resin layer 41 forming the surface contains a polyolefin and the second heat-sealable resin layer 42 contains an acid-modified polyolefin when the heat-sealable resin layer 4 includes the first heat-sealable resin layer 41 and the second heat-sealable resin layer 42 and does not include the later-described adhesive layer 5.

The thickness of the second heat-sealable resin layer 42 is not particularly limited as long as the heat-sealable resin layer 4 exhibits a function of being heat-sealed to hermetically seal the electrical storage device element.

The thickness of the second heat-sealable resin layer 42 is preferably larger than the thickness of the first heat-sealable resin layer 41, from the viewpoint of effectively suppressing crushing in heat-sealing of the first heat-sealable resin layer 41, improving insulation quality, and improving the sealing property of the exterior material for electrical storage devices. For the first heat-sealable resin layer 41, a resin that easily flows at a high temperature is preferably used so as to give excellent heat-sealability. By satisfying such a thickness relationship, the first heat-sealable resin layer 41, which is a part forming the heat-sealable resin layer 4 and is formed of a resin that easily flows, can be thinned to improve the insulation quality of the exterior material for electrical storage devices. By appropriately adjusting the MFR, the melting point, the molecular weight and the like of the resin forming the first heat-sealable resin layer 41, a resin layer that easily flows at a high temperature can be formed as the first heat-sealable resin layer 41.

The thickness of the second heat-sealable resin layer 42 is preferably about 100 μm or less, about 85 μm or less, or about 60 μm or less, and 5 μm or more, 10 μm or more, 20 μm or more, 30 μm or more, or 40 μm or more, and is preferably in the range of about 5 to 100 μm, about 5 to 85 μm, about 5 to 60 μm, about 10 to 100 μm, about 10 to 85 μm, about 10 to 60 μm, about 20 to 100 μm, about 20 to 85 μm, about 20 to 60 μm, about 30 to 100 μm, about 30 to 85 μm, about 30 to 60 μm, about 40 to 100 μm, about 40 to 85 μm, or about 40 to 60 μm, from the viewpoint of effectively suppressing crushing in heat-sealing of the first heat-sealable resin layer 41, improving insulation quality, and improving the sealing property of the exterior material for electrical storage devices.

The heat-sealable resin layer 4 may further include other heat-sealable resin layers such as a third heat-sealable resin layer and a fourth heat-sealable resin layer on the barrier layer 3 side of the second heat-sealable resin layer 42 in addition to the first heat-sealable resin layer 41 and the second heat-sealable resin layer 42. Examples of other resins forming the heat-sealable resin layer include the same as the resins described for the first heat-sealable resin layer 41. The thickness of each of the other heat-sealable resin layers is, for example, the same thickness as the thickness described for the second heat-sealable resin layer 42.

The total thickness of the heat-sealable resin layer 4 is preferably about 100 μm or less, about 85 μm or less, or about 60 μm or less, and 5 μm or more, 10 μm or more, 20 μm or more, 30 μm or more, or 40 μm or more, and is preferably in the range of about 5 to 100 μm, about 5 to 85 μm, about 5 to 60 μm, about 10 to 100 μm, about 10 to 85 μm, about 10 to 60 μm, about 20 to 100 μm, about 20 to 85 μm, about 20 to 60 μm, about 30 to 100 μm, about 30 to 85 μm, about 30 to 60 μm, about 40 to 100 μm, about 40 to 85 μm, or about 40 to 60 μm.

[Adhesive layer 5]

In the exterior material for electrical storage devices according to the present disclosure, the adhesive layer 5 is a layer provided between the barrier layer 3 (or corrosion-resistant film) and the heat-sealable resin layer 4 if necessary for firmly bonding these layers to each other.

The adhesive layer 5 is formed from a resin capable of bonding the barrier layer 3 and the heat-sealable resin layer 4 to each other. The resin to be used for forming the adhesive layer 5 is, for example, the same as that of the adhesive exemplified for the adhesive agent layer 2. Preferably, the resin to be used for forming the adhesive layer 5 contains a polyolefin backbone. Examples thereof include the polyolefins and acid-modified polyolefins exemplified for the first heat-sealable resin layer 41 described above. The resin forming the adhesive layer 5 can be confirmed to contain a polyolefin backbone by an analysis method such as infrared spectroscopy, gas chromatography-mass spectrometry, and the analysis method is not particularly limited. In addition, it is preferable that a peak derived from maleic anhydride is detected when the resin forming the adhesive layer 5 is analyzed by infrared spectroscopy. For example, when a maleic anhydride-modified polyolefin is measured by infrared spectroscopy, peaks derived from maleic anhydride are detected near wavenumbers of 1760 $cm^{-1}$ and 1780 $cm^{-1}$. However, if the degree of acid modification is low, the peaks may be too small to be detected. In that case, the peaks can be analyzed by nuclear magnetic resonance spectroscopy.

The adhesive layer 5 can be formed from a thermoplastic resin or a cured product of a thermosetting resin. Preferably, the adhesive layer 5 is formed from a thermoplastic resin.

From the viewpoint of firmly bonding the barrier layer 3 and the heat-sealable resin layer 4 to each other, it is preferable that the adhesive layer 5 contains an acid-modified polyolefin. As the acid-modified polyolefin, polyolefins modified with a carboxylic acid or an anhydride thereof, polypropylene modified with a carboxylic acid or an anhydride thereof, maleic anhydride-modified polyolefins, and maleic anhydride-modified polypropylene is especially preferable.

Further, from the viewpoint of obtaining an exterior material for electrical storage devices excellent in shape stability after molding while decreasing the thickness of the exterior material for electrical storage devices, the adhesive layer 5 is more preferably a cured product of a resin composition containing an acid-modified polyolefin and a curing agent. Preferred examples of the acid-modified polyolefin include those described above.

When the exterior material 10 for electrical storage devices according to the present disclosure contains the adhesive layer 5, it is preferable that the first heat-sealable resin layer 41 forming the surface contains a polyolefin and the adhesive layer 5 contains an acid-modified polyolefin as described above.

The adhesive layer 5 is preferably a cured product of a resin composition containing an acid-modified polyolefin

and at least one selected from the group consisting of a compound having an isocyanate group, a compound having an oxazoline group, and a compound having an epoxy group, especially preferably a cured product of a resin composition containing an acid-modified polyolefin and at least one selected from the group consisting of a compound having an isocyanate group and a compound having an epoxy group. Preferably, the adhesive layer 5 preferably contains at least one selected from the group consisting of polyurethane, polyester and epoxy resin. More preferably, the adhesive layer 5 contains polyurethane and epoxy resin. As the polyester, for example, an amide ester resin is preferable. The amide ester resin is generally produced by reaction of a carboxyl group with an oxazoline group. The adhesive layer 5 is more preferably a cured product of a resin composition containing at least one of these resins and the acid-modified polyolefin. When an unreacted substance of a curing agent, such as a compound having an isocyanate group, a compound having an oxazoline group, or an epoxy resin remains in the adhesive layer 5, the presence of the unreacted substance can be confirmed by, for example, a method selected from infrared spectroscopy, Raman spectroscopy, time-of-flight secondary ion mass spectrometry (TOF-SIMS) and the like.

From the viewpoint of further improving adhesion between the barrier layer 3 and the adhesive layer 5, the adhesive layer 5 is preferably a cured product of a resin composition containing a curing agent having at least one selected from the group consisting of an oxygen atom, a heterocyclic ring, a C=N bond, and a C-O-C bond. Examples of the curing agent having a heterocyclic ring include curing agents having an oxazoline group, and curing agents having an epoxy group. Examples of the curing agent having a C=N bond include curing agents having an oxazoline group and curing agents having an isocyanate group. Examples of the curing agent having a C-O-C bond include curing agents having an oxazoline group, curing agents having an epoxy group, and polyurethane. Whether the adhesive layer 5 is a cured product of a resin composition containing any of these curing agents can be confirmed by, for example, a method such as gas chromatography-mass spectrometry (GCMS), infrared spectroscopy (IR), time-of-flight secondary ion mass spectrometry (TOF-SIMS), or X-ray photoelectron spectroscopy (XPS).

The compound having an isocyanate group is not particularly limited, and is preferably a polyfunctional isocyanate compound from the viewpoint of effectively improving adhesion between the barrier layer 3 and the adhesive layer 5. The polyfunctional isocyanate compound is not particularly limited as long as it is a compound having two or more isocyanate groups. Specific examples of the polyfunctional isocyanate-based curing agent include pentane diisocyanate (PDI), isophorone diisocyanate (IPDI), hexamethylene diisocyanate (HDI), tolylene diisocyanate (TDI), diphenylmethane diisocyanate (MDI), polymerized or nurated products thereof, mixtures thereof, and copolymers of these compounds with other polymers. Examples thereof include adduct forms, biuret forms, and isocyanurate forms.

The content of the compound having an isocyanate group in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

The compound having an oxazoline group is not particularly limited as long as it is a compound having an oxazoline backbone. Specific examples of the compound having an oxazoline group include compounds having a polystyrene main chain and compounds having an acrylic main chain. Examples of the commercially available product include EPOCROS series manufactured by Nippon Shokubai Co., Ltd.

The proportion of the compound having an oxazoline group in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

Examples of the compound having an epoxy group include epoxy resins. The epoxy resin is not particularly limited as long as it is a resin capable of forming a crosslinked structure by epoxy groups existing in the molecule, and a known epoxy resin can be used. The weight average molecular weight of the epoxy resin is preferably about 50 to 2,000, more preferably about 100 to 1,000, still more preferably about 200 to 800. In the present invention, the weight average molecular weight of the epoxy resin is a value obtained by performing measurement by gel permeation chromatography (GPC) under the condition of using polystyrene as a standard sample.

Specific examples of the epoxy resin include glycidyl ether derivatives of trimethylolpropane, bisphenol A diglycidyl ether, modified bisphenol A diglycidyl ether, novolak glycidyl ether, glycerin polyglycidyl ether and polyglycerin polyglycidyl ether. The epoxy resins may be used alone, or may be used in combination of two or more thereof.

The proportion of the epoxy resin in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

The polyurethane is not particularly limited, and a known polyurethane can be used. The adhesive layer 5 may be, for example, a cured product of two-liquid curable polyurethane.

The proportion of the polyurethane in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5 in an atmosphere including a component which induces corrosion of the barrier layer, such as an electrolytic solution.

When the adhesive layer 5 is a cured product of a resin composition containing at least one selected from the

group consisting of a compound having an isocyanate group, a compound having an oxazoline group and an epoxy resin, and the acid-modified polyolefin, the acid-modified polyolefin functions as a main component, and the compound having an isocyanate group, the compound having an oxazoline group, and the compound having an epoxy group each function as a curing agent.

From the viewpoint of effectively suppressing crushing in heat-sealing of the first heat-sealable resin layer 41 and improving the sealing property of the exterior material for electrical storage devices, the total thickness of the adhesive layer 5 and the heat-sealable resin layer 4 is preferably about 50 μm or more, more preferably about 60 μm or more, still more preferably about 70 μm or more, and preferably about 120 μm or less, more preferably 100 μm or less, and is preferably in the range of about 50 to 120 μm, about 50 to 100 μm, about 60 to 120 μm, about 60 to 100 μm, about 70 to 120 μm, or about 70 to 100 μm.

In addition, the preferred ratio of the thickness of the first heat-sealable resin layer 41 and the thickness of the second heat-sealable resin layer 42 is as follows. Where the thickness of the first heat-sealable resin layer 41 is 1.0, the thickness of the second heat-sealable resin layer 42 is preferably about 1.5 to 6.0, more preferably about 1.7 to 5.5, still more preferably about 2.0 to 5.0. In addition, the preferred ratio of the thickness of the adhesive layer 5, the thickness of the first heat-sealable resin layer 41 and the thickness of the second heat-sealable resin layer 42 is as follows. Where the thickness of the first heat-sealable resin layer 41 1.0, it is preferable that the thickness of the adhesive layer 5 is about 0.5 to 3.0 and the thickness of the second heat-sealable resin layer 42 is about 1.5 to 6.0, it is more preferable that the thickness of the adhesive layer 5 is about 0.7 to 2.3 and the thickness of the second heat-sealable resin layer 42 is about 1.7 to 5.5, and it is still more preferable that the thickness of the adhesive layer 5 is about 1.0 to 2.0 and the thickness of the second heat-sealable resin layer 42 is about 2.0 to 5.0.

A specific example of the preferred ratio of the thickness of the first heat-sealable resin layer 41 and the thickness of the second heat-sealable resin layer 42 is as follows. Where the thickness of the first heat-sealable resin layer 41 is 1.0, the thickness of the second heat-sealable resin layer 42 is, for example, 2.0, 2.7, 3.0, 4.0, 5.0 or 6.0. A preferred specific example of the thickness of the adhesive layer 5, the thickness of the first heat-sealable resin layer 41 and the thickness of the second heat-sealable resin layer 42 is as follows. Where the thickness of the first heat-sealable resin layer 41 is 1.0, the thickness of the adhesive layer 5 is 1.0 and the thickness of the second heat-sealable resin layer 42 is 2.0, the thickness of the adhesive layer 5 is 1.7 and the thickness of the second heat-sealable resin layer 42 is 2.7, the thickness of the adhesive layer 5 is 1.3 and the thickness of the second heat-sealable resin layer 42 is 3.0, and the thickness of the adhesive layer 5 is 2.0 and the thickness of the second heat-sealable resin layer 42 is 5.0.

From the viewpoint of effectively suppressing crushing in heat-sealing of the first heat-sealable resin layer 41, improving insulation quality, and improving the sealing property of the exterior material for electrical storage devices, the thickness of the adhesive layer 5 may be larger than the thickness of the first heat-sealable resin layer 41. For example, when the heat-sealable resin layer 4 includes a single layer of the first heat-sealable resin layer 41, and the adhesive layer 5 is provided between the barrier layer 3 and the first heat-sealable resin layer 41, the thickness of the adhesive layer 5 is preferably equal to or more than the thickness of the first heat-sealable resin layer 41. As the first heat-sealable resin layer 41, a resin that more easily flows at a higher temperature as compared to the adhesive layer 5 is preferably used so as to give excellent heat-sealability. By satisfying such a thickness relationship, the first heat-sealable resin layer 41, which is a part forming the heat-sealable resin layer 4 and is formed of a resin that easily flows, can be thinned to improve the insulation quality of the exterior material for electrical storage devices. By appropriately adjusting the MFR, the melting point, the molecular weight and the like of the resin forming the first heat-sealable resin layer 41, a resin layer that easily flows at a high temperature can be formed as the first heat-sealable resin layer 41.

In the exterior material 10 for electrical storage devices, the thickness of the second heat-sealable resin layer 42 is preferably equal to or more than the thickness of the adhesive layer 5 when the heat-sealable resin layer 4 includes the first heat-sealable resin layer 41 and the second heat-sealable resin layer 42. Since the second heat-sealable resin layer 42 has a better moisture barrier property as compared to the adhesive layer 5 contributing to bonding, the moisture barrier property of the exterior material for electrical storage devices can be improved by providing such a thickness relationship.

From the viewpoint of exhibiting high insulation quality after heat-sealing of the heat-sealable resin layer, it is preferable that the thickness of the second heat-sealable resin layer 42 is larger than the thickness of the adhesive layer 5 and the thickness of the adhesive layer 5 is larger than the thickness of the first heat-sealable resin layer 41.

The thickness of the adhesive layer 5 is preferably about 60 μm or less, about 50 μm or less, about 40 μm or less, about 30 μm or less, about 20 μm or less, about 10 μm or less, about 8 μm or less, about 5 μm or less, or about 3 μm or less, and preferably about 0.1 μm or more, about 0.5 μm or more, about 5 μm or more, about 10 μm or more, or about 20 μm or more, and is preferably in the range of about 0.1 to 60 μm, about 0.1 to 50 μm, about 0.1 to 40 μm, about 0.1 to 30 μm, about 0.1 to 20 μm, about 0.1 μm to 10 μm, about 0.1 to 8 μm, about 0.1 to 5 μm, about 0.1 to 3 μm, about 0.5 to 60 μm, about 0.5 to 50 μm, about 0.5 to 40 μm, about 0.5 to 30 μm, about 0.5 to 20 μm, about 0.5 μm to 10 μm, about 0.5 to 8 μm, about 0.5 to 5 μm, about 0.5 to 3 μm, about 5 to 60 μm, about 5 to 50 μm, about 5 to 40 μm, about 5 to 30 μm, about 5 to 20 μm, about 5 μm to 10 μm, about 5 to 8 μm, about 10 to 60 μm, about 10 to 50

μm, about 10 to 40 μm, about 10 to 30 μm, or about 10 to 20 μm. More specifically, in the case of a cured product of the adhesive exemplified for the adhesive agent layer 2 or an acid-modified polyolefin and a curing agent, the thickness of the adhesive layer is preferably about 1 to 10 μm, more preferably 1 μm or more and less than 10 μm, still more preferably about 1 to 8 μm, even more preferably about 1 to 5 μm, even more preferably about 1 to 3 μm. When the resin exemplified for the first heat-sealable resin layer 41 is used, the thickness of the adhesive layer is preferably about 2 to 60 μm, about 2 to 50 μm, about 10 to 60 μm, about 10 to 50 μm, about 20 to 60 μm, or about 20 to 50 μm. When the adhesive layer 5 is a cured product of a resin composition containing the adhesive exemplified for the adhesive agent layer 2 or an acid-modified polyolefin and a curing agent, the adhesive layer 5 can be formed by, for example, applying the resin composition and curing the resin composition by heating or the like. When the resin exemplified for the first heat-sealable resin layer 41 is used, for example, extrusion molding of the heat-sealable resin layer 4 and the adhesive layer 5 can be performed.

In the exterior material 10 for electrical storage devices according to the present disclosure, specific examples of the preferred laminated configuration on a side opposite to the base material layer 1 side from the barrier layer 3 include a laminated configuration in which the adhesive layer 5 having a thickness of about 20 to 60 μm and the first heat-sealable resin layer 41 having a thickness of 20 to 50 μm are laminated in this order from the barrier layer 3 side; a laminated configuration in which the adhesive layer 5 having a thickness of about 20 to 60 μm and the first heat-sealable resin layer 41 having a thickness of 20 to 40 μm are laminated in this order from the barrier layer 3 side; a laminated configuration in which the adhesive layer 5 having a thickness of about 5 to 30 μm, the second heat-sealable resin layer 42 having a thickness of about 30 to 80 μm and the first heat-sealable resin layer 41 having a thickness of about 5 to 25 μm are laminated in this order from the barrier layer 3 side; and a laminated configuration in which the adhesive layer 5 having a thickness of about 5 to 20 μm, the second heat-sealable resin layer 42 having a thickness of about 40 to 80 μm and the first heat-sealable resin layer 41 having a thickness of about 5 to 25 μm are laminated in this order from the barrier layer 3 side.

[Surface coating layer 6]

The exterior material for electrical storage devices according to the present disclosure may include a surface coating layer 6 on the base material layer 1 (on a side opposite to the barrier layer 3 from the base material layer 1) if necessary for the purpose of improving at least one of designability, electrolytic solution resistance, scratch resistance, moldability and the like. The surface coating layer 6 is a layer located on the outermost layer side of the exterior material for electrical storage devices when the electrical storage device is constructed using the exterior material for electrical storage devices.

The surface coating layer 6 can be formed from, for example, a resin such as polyvinylidene chloride, polyester, polyurethane, acrylic resin or epoxy resin.

When the resin forming the surface coating layer 6 is a curable resin, the resin may be any of a one-liquid curable type and a two-liquid curable type, and is preferably a two-liquid curable type. Examples of the two-liquid curable resin include two-liquid curable polyurethane, two-liquid curable polyester and two-liquid curable epoxy resins. Of these, two-liquid curable polyurethane is preferable.

Examples of the two-liquid curable polyurethane include polyurethane which contains a main component containing a polyol compound and a curing agent containing an isocyanate compound. The polyurethane is preferably two-liquid curable polyurethane having polyol such as polyester polyol, polyether polyol or acrylic polyol as a main component, and aromatic or aliphatic polyisocyanate as a curing agent. Preferably, polyester polyol having a hydroxyl group in the side chain in addition to a hydroxyl group at the end of the repeating unit is used as the polyol compound. Since the surface coating layer 6 is formed of polyurethane, excellent electrolytic solution resistance is imparted to the exterior material for electrical storage devices.

If necessary, the surface coating layer 6 may contain additives such as the slipping agent, an anti-blocking agent, a matting agent, a flame retardant, an antioxidant, a tackifier and an anti-static agent on at least one of the surface and the inside of the surface coating layer 6 according to the functionality and the like to be imparted to the surface coating layer 6 and the surface thereof. The additives are in the form of, for example, fine particles having an average particle diameter of about 0.5 nm to 5 μm. The average particle diameter of the additives is a median diameter measured by a laser diffraction/scattering particle size distribution measuring apparatus.

The additives may be either inorganic substances or organic substances. The shape of the additive is not particularly limited, and examples thereof include a spherical shape, a fibrous shape, a plate shape, an amorphous shape and a scaly shape.

Specific examples of the additives include talc, silica, graphite, kaolin, montmorillonite, mica, hydrotalcite, silica gel, zeolite, aluminum hydroxide, magnesium hydroxide, zinc oxide, magnesium oxide, aluminum oxide, neodymium oxide, antimony oxide, titanium oxide, cerium oxide, calcium sulfate, barium sulfate, calcium carbonate, calcium silicate, lithium carbonate, calcium benzoate, calcium oxalate, magnesium stearate, alumina, carbon black, carbon nanotubes,

high-melting-point nylons, acrylate resins, crosslinked acryl, crosslinked styrene, crosslinked polyethylene, benzoguanamine, gold, aluminum, copper and nickel. The additives may be used alone, or may be used in combination of two or more thereof. Of these additives, silica, barium sulfate and titanium oxide are preferable from the viewpoint of dispersion stability, costs, and so on. The surface of the additive may be subjected to various kinds of surface treatments such as insulation treatment and dispersibility enhancing treatment.

The method for forming the surface coating layer 6 is not particularly limited, and examples thereof include a method in which a resin for forming the surface coating layer 6 is applied. When the additive is added to the surface coating layer 6, a resin mixed with the additive may be applied.

The thickness of the surface coating layer 6 is not particularly limited as long as the above-mentioned function as the surface coating layer 6 is performed, and it is, for example, about 0.5 to 10 μm, preferably about 1 to 5 μm.

2. Method for manufacturing exterior material for electrical storage devices

The method for manufacturing an exterior material for electrical storage devices is not particularly limited as long as a laminate is obtained in which the layers of the exterior material for electrical storage devices according to the present disclosure are laminated. Examples thereof include a method including the step of laminating at least the base material layer 1, the barrier layer 3 and the heat-sealable resin 4 in this order. As described above, an aluminum alloy foil satisfying the predetermined formulation described above can be used as the barrier layer 3. The heat-sealable resin layer 4 includes a single layer or multiple layers, and the first heat-sealable resin layer 41 forming the surface of the laminate in the heat-sealable resin layer 4 has a logarithmic decrement $\Delta E$ of 0.25 or less at 140°C in measurement with a rigid pendulum.

An example of the method for manufacturing an exterior material for electrical storage devices according to the present disclosure is as follows. First, a laminate including the base material layer 1, the adhesive agent layer 2 and the barrier layer 3 in this order (hereinafter, the laminate may be described as a "laminate A") is formed. Specifically, the laminate A can be formed by a dry lamination method in which an adhesive to be used for formation of the adhesive agent layer 2 is applied onto the base material layer 1 or the barrier layer 3, the surface of which is subjected to a chemical conversion treatment if necessary, using a coating method such as a gravure coating method or a roll coating method, and dried, the barrier layer 3 or the base material layer 1 is then laminated, and the adhesive agent layer 2 is cured.

Subsequently, the heat-sealable resin layer 4 is laminated on the barrier layer 3 of the laminate A. When the heat-sealable resin layer 4 is laminated directly on the barrier layer 3, the heat-sealable resin layer 4 may be laminated onto the barrier layer 3 of the laminate A by a method such as a thermal lamination method or an extrusion lamination method. When the adhesive layer 5 is provided between the barrier layer 3 and the heat-sealable resin layer 4, mention is made of, for example, (1) a method in which the adhesive layer 5 and the heat-sealable resin layer 4 are extruded to be laminated on the barrier layer 3 of the laminate A (extrusion lamination method or tandem lamination method); (2) a method in which the adhesive layer 5 and the heat-sealable resin layer 4 are laminated to form a laminate separately, and the laminate is laminated on the barrier layer 3 of the laminate A by a thermal lamination method, or a method in which a laminate with the adhesive layer 5 laminated on the barrier layer 3 of the laminate A is formed, and laminated to the heat-sealable resin layer 4 by a thermal lamination method; (3) a method in which the melted adhesive layer 5 is poured between the barrier layer 3 of the laminate A and the heat-sealable resin layer 4 formed in a sheet shape beforehand, and simultaneously the laminate A and the heat-sealable resin layer 4 are bonded to each other with the adhesive layer 5 interposed therebetween (sandwich lamination); and (4) an adhesive for forming the adhesive layer 5 is applied by solution coating and dried or baked to laminate the adhesive on the barrier layer 3 of the laminate A, and the heat-sealable resin layer 4 formed in a sheet shape in advance is laminated on the adhesive layer 5.

When the surface coating layer 6 is provided, the surface coating layer 6 is laminated on a surface of the base material layer 1 on a side opposite to the barrier layer 3. The surface coating layer 6 can be formed by, for example, coating a surface of the base material layer 1 with the resin that forms the surface coating layer 6. The order of the step of laminating the barrier layer 3 on a surface of the base material layer 1 and the step of laminating the surface coating layer 6 on a surface of the base material layer 1 is not particularly limited. For example, the surface coating layer 6 may be formed on a surface of the base material layer 1, followed by forming the barrier layer 3 on a surface of the base material layer 1 on a side opposite to the surface coating layer 6.

As described above, a laminate including the surface coating layer 6 provided if necessary, the base material layer 1, the adhesive agent layer 2 provided if necessary, the barrier layer 3, the adhesive layer 5 provided if necessary, and the heat-sealable resin layer 4 in this order is formed, and the laminate may be further subjected to a heating treatment for strengthening the bondability of the adhesive agent layer 2 and the adhesive layer 5 provided if necessary.

In the exterior material for electrical storage devices, the layers forming the laminate may be subjected to surface activation treatment such as corona treatment, blast treatment, oxidation treatment or ozone treatment if necessary to improve processing suitability. For example, by subjecting a surface of the base material layer 1, which is opposite to the barrier layer 3, to a corona treatment, the ink printability of the surface of the base material layer 1 can

be improved.

3. Uses of exterior material for electrical storage devices

The exterior material for electrical storage devices according to the present disclosure is used as a packaging for hermetically sealing and storing electrical storage device elements such as a positive electrode, a negative electrode, and an electrolyte. That is, in a packaging formed of the exterior material for electrical storage devices according to the present disclosure, an electrical storage device element including at least a positive electrode, a negative electrode, and an electrolyte can be housed to obtain an electrical storage device.

Specifically, an electrical storage device element including at least a positive electrode, a negative electrode, and an electrolyte is covered with the exterior material for electrical storage devices according to the present disclosure such that a flange portion (region where a heat-sealable resin layer is in contact with itself) can be formed on the periphery of the electrical storage device element while a metal terminal connected to each of the positive electrode and the negative electrode protrudes to the outside, and the heat-sealable resin layer at the flange portion is heat-sealed with itself, thereby providing an electrical storage device using the exterior material for electrical storage devices. When the electrical storage device element is housed in the packaging formed of the exterior material for electrical storage devices according to the present disclosure, the packaging is formed in such a manner that the heat-sealable resin portion of the exterior material for electrical storage devices according to the present disclosure is on the inner side (a surface contacting the electrical storage device element).

The exterior material for electrical storage devices according to the present disclosure can be suitably used for electrical storage devices such as batteries (including condensers, capacitors and the like.). The exterior material for electrical storage devices according to the present disclosure may be used for either primary batteries or secondary batteries, and is preferably used for secondary batteries. The type of a secondary battery to which the exterior material for electrical storage devices according to the present disclosure is applied is not particularly limited, and examples thereof include lithium ion batteries, lithium ion polymer batteries, all-solid-state batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors. Of these secondary batteries, preferred subjects to which the exterior material for electrical storage devices according to the present disclosure is applied include lithium ion batteries and lithium ion polymer batteries.

EXAMPLES

Hereinafter, the present disclosure will be described in detail by way of examples and comparative examples. However, the present disclosure is not limited to examples.

<Manufacturing of aluminum alloy foil>

Ingots of aluminum alloys having each composition shown in Table 1 (balance represents Al and inevitable impurities) were provided. The ingots were subjected to homogenization treatment under the conditions shown in Table 1, and then hot-rolled at a finish temperature of 330°C to obtain sheet materials having a thickness of 3 mm. Thereafter, a sample of an aluminum alloy foil having a thickness of 40 μm and a width of 1200 mm was prepared by passing through cold rolling, intermediate annealing and final cold rolling. The intermediate annealing method is shown in Table 1. In the section of cold rolling in Table 1, a sheet thickness immediately before intermediate annealing and the cold rolling ratio up to the sheet thickness are shown.

The following tests or measurements were performed on aluminum alloy foils produced. Tables 1 and 2 show the results.

• Breaking strength and elongation of aluminum alloy foil

Both tensile strength and breaking elongation were measured in a tensile test. The tensile test was conducted in accordance with JIS Z 2241: 2011, where a JIS No. 5 test piece was taken from a sample in such a manner that it was possible to measure the elongation in a direction at 0° with respect to the rolling direction, and subjected to the test at a tension rate of 2 mm/min using a universal tensile tester (AGS-X 10 kN manufactured by Shimadzu Corporation). The elongation is breaking elongation, and was calculated by the following method. First, before the test, the center of the test piece in a longitudinal direction is marked with two lines along a longitudinal direction of the test piece at an interval of 50 mm as a gauge point distance. After the test, the broken surfaces of the aluminum alloy foil were matched with each other, and the distance between the marks was measured. The gauge point distance (50 mm) was subtracted from the distance between the marks to calculate the elongation amount (mm), and the elongation amount was divided

by the gauge point distance (50 mm) to determine the elongation ratio (%). The elongation of the aluminum alloy foil is a total elongation at breakage (a sum of the elastic elongation and the plastic elongation in an extensometer), and is expressed as a percentage with respect to the extensometer gauge point distance.

• Average crystal grain size

Electropolishing was performed on a surface of the aluminum alloy foil using a mixed solution of 20 vol% perchloric acid + 80 vol% ethanol at a voltage of 20 V. Subsequently, the aluminum alloy foil was anodized in a Barker's solution under the condition of a voltage of 30 V. The crystal grains of the treated sample material were observed with an optical microscope. The average crystal grain size was calculated from the photograph by a cutting method defined in JIS G0551.

• L1 (length of HAGB)/L2 (length of LAGB)

The foil surface was electropolished, and the crystal orientation was then analyzed with a SEM-EBSD apparatus to observe a high-angle grain boundary (HAGB) in which the orientation difference between crystal grains is 15 ° or more and a low-angle grain boundary (LAGB) in which the orientation difference is 2 ° or more and less than 15°. Four fields of visual with a visual field size of 170 × 340 μm were measured at a magnification of 500 times, the length of HAGB (L1) and the length of LAGB (L2) per unit area in the visual field were determined, and the ratio between the lengths was calculated. The calculated ratios L1/L2 are shown in Table 2.

• Crystal orientation

The representative orientation was set to { 112} <111> for Copper orientation and {123}<634> for R orientation. The density in each of the orientations was obtained by the following method. Incomplete pole figures at {111}, {200} and {220} were measured by an X-ray diffraction method, and from the results thereof, a crystal orientation distribution function (ODF; Orientation Distribution Function) was determined to obtain orientation densities in Copper orientation and R orientation.

• Surface analysis

The Mg concentration of the foil surface was estimated by X-ray photoelectron spectroscopy (XPS). The atomic concentration of each element was determined by waveform separation of a narrow spectrum obtained by narrow scan measurement for a surface portion extending from the outermost surface to a depth of 8 mm. For the determination of the Mg amount, a Mg2p spectrum was used. Details of analysis conditions are as follows.

Measuring apparatus: PHI 5000-VersaProbeIII manufactured by ULVAC-PHI, Inc.
Incident X-ray: A1 Kα monochromatized X-ray, hv = 1486.6 ev
X-ray source output: 100 W, 20 kV, 5.8 mA
Pass energy: 26 eV
Step: 0.05 eV
Analysis region (beam diameter): 100 μm ×1.4 mm
Detection angle: 45°
Photoelectron capture angle: 45 degrees
Measurement region: 1.4 mm in X direction at 100 μφ
Peak shift correction: corrected so as to obtain a C-C peak at 285.0 eV in the C1s peak
Charge neutralization: charge neutralization with dual beams of Ar ions and electron beams

• Measurement of thickness of oxide film

The thickness of the oxide film was measured with an electron probe micro analyzer (FE-EPMA) apparatus. The thickness of the oxide film of the sample was calculated using a calibration curve of X-ray intensities obtained from oxide film samples each having a known thickness. FE-EPMA used was JXA-8530 F from JEOL Ltd. The analysis conditions were an acceleration voltage of 10 kV, an irradiation current of 100 nA and a beam diameter of 50 μm.

• Piercing strength

An aluminum alloy foil having a thickness of 40 μm was pierced at a speed of 50 mm/min with a needle having

a diameter of 1.0 mm and a tip shape radius of 0.5 mm, and a maximum load (N) until the needle pierced through the foil was measured as a piercing strength. Here, samples with a piercing strength of 9.0 N or more were evaluated as having good piercing resistance. These samples are rated "O" (good) in Table 2. Samples with a piercing strength of less than 9.0 N were evaluated as having poor piercing resistance. These samples are rated "X" (poor) in Table 2.

• Critical molding height

The molding height was evaluated by a square tube molding test. The test was conducted using a universal thin plate molding tester (Model 142/20 manufactured by ERICHSEN Inc.). An aluminum alloy foil having a thickness of 40 μm was applied to a square punch having a shape shown in Fig. 12 (one side length D = 37 mm, chamfering diameter of corner R = 4.5 mm). As test conditions, the wrinkle suppressing force was set to 10 kN, the scale of the rate of upward movement of the punch (molding rate) was set to 1, and mineral oil was applied as a lubricant to one surface of the foil (a surface hit by the punch). The punch moving upward from the lower part of the apparatus hits the foil to mold the foil. The maximum height which the upward moving punch reached while allowing molding without cracks and pinholes in molding performed three times in a row was defined as a critical molding height (mm) of the material. The height of the punch was changed at intervals of 0.5 mm. Here, samples with a molding height of 7.0 mm or more were evaluated as having good moldability. These samples are rated "O" (good) in Table 2. Samples with a molding height of less than 7.0 mm were evaluated as having poor moldability. These samples are rated "X" (poor) in Table 2.

• Evaluation of corrodibility

In 1 L of a solution of propylene carbonate/diethylene carbonate = 1/1 (volume ratio), 152 g of lithium hexafluorophosphate was dissolved to prepare 1 mol/L of an electrolytic solution. Next, in a 200 mL bipolar beaker cell, the aluminum alloy foil used in each of Examples 1 to 13 and Comparative Examples 14 to 18 was set in the positive electrode, metal lithium was set in the negative electrode, and the electrolytic solution was added. In this state, a potential difference of 0.1 V was applied for 1 hour and 3 hours. Thereafter, the surface of the aluminum alloy foil was visually observed with a microscope. As shown in the micrograph of Figs. 8 and 9 (observation magnification: 200 times), samples whose surface was corroded (Fig. 9) were evaluated as having poor corrosion resistance. These samples are rated "X" (poor) in Table 2. Samples whose surface had no change (Fig. 8) were evaluated as having good corrosion resistance. These samples are rated "O" (good) in Table 2. Samples whose surface had a change at a very small part thereof were evaluated as having slightly low corrosion resistance. These samples are rated "△" (fair) in Table 2. On a corroded aluminum alloy foil surface (evaluation ×), a compound of aluminum and lithium was generated, and a situation was observed in which the surface bulged due to volume expansion. Table 2 shows the results for the test materials.

<Manufacturing of exterior material for electrical storage devices>

(Examples 1, 2 and 4 and Comparative Examples 1 and 2)

As a base material layer, a laminated film was prepared in which a polyethylene terephthalate film (12 μm), an adhesive agent layer (two-liquid curable urethane adhesive (polyol compound and aromatic isocyanate compound), thickness: 3 μm) and a biaxially stretched nylon film (thickness: 15 μm) were laminated in this order. Next, a barrier layer including the aluminum alloy foil (having a composition as in Table 1 and a thickness of 40 μm) with an acid-resistant film formed on both surfaces was laminated on a biaxially stretched nylon film (thickness: 15 μm) of the base material layer by a dry lamination method. Specifically, to one surface of the aluminum alloy foil with an acid-resistant film (film formed by chromate treatment and having a chrome content of 30 mg/$m^2$) formed on both surfaces, a two-liquid curable urethane adhesive (polyol compound and aromatic isocyanate compound) was applied to form an adhesive agent layer (thickness after curing: 3 μm) was formed on the aluminum alloy foil. The adhesive agent layer on the aluminum alloy foil and the biaxially stretched nylon film were then laminated, and aging treatment was then performed to prepare a laminate of base material layer/adhesive agent layer/barrier layer.

Next, maleic anhydride-modified polypropylene (thickness: 40 μm) as an adhesive layer and polypropylene (thickness: 40 μm) as a first heat-sealable resin layer were co-extruded onto the barrier layer of the obtained laminate to laminate an adhesive layer and a first heat-sealable resin layer on the barrier layer. Next, the obtained laminate was aged and heated to obtain an exterior material for electrical storage devices in which a polyethylene terephthalate film (12 μm), an adhesive agent layer (3 μm), a biaxially stretched nylon film (15 μm), an adhesive agent layer (3 μm), a barrier layer (40 μm), an adhesive layer (40 μm) and a first heat-sealable resin layer (40 μm) were laminated in this order. The first heat-sealable resin layers in Examples 1, 2 and 4 and Comparative Examples 1 and 2 have logarithmic decrements ΔE (values obtained by performing measurement using a rigid pendulum type physical property tester) at 140°C as shown in Table 3.

(Example 3 and Comparative Example 3)

As a base material layer, a laminated film was prepared in which a polyethylene terephthalate film (12 μm), an adhesive agent layer (two-liquid curable urethane adhesive (polyol compound and aromatic isocyanate compound), thickness: 3 μm) and a biaxially stretched nylon film (thickness: 15 μm) were laminated in this order. Next, a barrier layer including the aluminum alloy foil (having a composition as in Table 1 and a thickness of 40 μm) with an acid-resistant film formed on both surfaces was laminated on a biaxially stretched nylon film (thickness: 15 μm) of the base material layer by a dry lamination method. Specifically, to one surface of the aluminum alloy foil with an acid-resistant film (film formed by chromate treatment and having a chrome content of 30 $mg/m^2$) formed on both surfaces, a two-liquid curable urethane adhesive (polyol compound and aromatic isocyanate compound) was applied to form an adhesive agent layer (thickness after curing: 3 μm) was formed on the aluminum alloy foil. The adhesive agent layer on the aluminum alloy foil and the biaxially stretched nylon film were then laminated, and aging treatment was then performed to prepare a laminate of base material layer/adhesive agent layer/barrier layer.

Next, maleic anhydride-modified polypropylene as an adhesive layer (thickness: 20 μm), random polypropylene as a second heat-sealable resin layer (thickness: 20 μm) and random polypropylene as a first heat-sealable resin layer (thickness: 10 μm) were co-extruded onto the barrier layer of each of the obtained laminates to laminate the adhesive layer, the second heat-sealable resin layer and the first heat-sealable resin layer on the barrier layer, thereby obtaining an exterior material for electrical storage devices in which a polyethylene terephthalate film (12 μm), an adhesive agent layer (3 μm), a biaxially stretched nylon film (15 μm), an adhesive agent layer (3 μm), a barrier layer (40 μm), an adhesive layer (20 μm), a second heat-sealable resin layer (20 μm) and a first heat-sealable resin layer (10 μm) were laminated in this order. The first heat-sealable resin layers in Example 3 and Comparative Example 3 have logarithmic decrements $\Delta E$ (values obtained by performing measurement using a rigid pendulum type physical property tester) at 140°C as shown in Table 3.

On each of both surfaces of the exterior material for electrical storage devices, erucic acid amide was applied as a slipping agent to form a slipping agent layer.

<Evaluation of corrosion resistance of aluminum alloy foil>

Each of the aluminum alloy foils used in Examples 1 to 4 and Comparative Examples 1 to 3 was cut into a rectangle having a length of 45 mm and a width of 15 mm. Next, a rectangular polyethylene film having a length of 50 mm and a width of 20 mm was superposed on the front and back surfaces of the aluminum alloy foil so as to form an exposed portion of 1 cmφ on one of the front and back surfaces of the aluminum alloy foil, and attached by heat-welding to cover the aluminum alloy foil, thereby obtaining a test sample. The corrosion resistance of the test sample was evaluated at a portion of 1 cmφ where the aluminum alloy foil AL was exposed, and the end part of the test sample which was not immersed in an electrolytic solution was exposed to be connected to a working electrode. Next, as shown in the schematic diagram of Fig. 6, the test sample AL was set as a working electrode, and metallic lithium Li (disc shape of 15 mm in diameter and 0.35 mm in thickness) was set as a counter electrode, followed by immersion in an electrolytic solution (including $LiPF_6$ at 1 mol/l and a mixed liquid of ethylene carbonate, diethyl carbonate and dimethyl carbonate (volume ratio 1 : 1 : 1)). In this state, a voltage of 0.1 V was applied for 1 hour in an environment at 20°C, and a surface of the aluminum alloy foil was then observed. Samples whose surface was corroded as in Fig. 9 were rated "C", and samples whose surface had no change as in Fig. 8 were rated "A". Table 3 shows the results. On a corroded aluminum alloy foil surface, a compound with lithium was generated, and a situation was observed in which the surface bulged due to volume expansion.

<Evaluation of moldability>

Each of the obtained exterior materials for electrical storage devices was cut to a rectangle having a length of 90 mm (MD) and a width of 150 mm (TD) to obtain a test sample. The MD of the exterior material for electrical storage devices corresponds to the rolling direction (RD) of the aluminum alloy foil, the TD of the exterior material for electrical storage devices corresponds to the TD of the aluminum alloy foil. Using a mold having a rectangular opening having a size of 31.6 mm (MD)×54.5 mm (TD) (female surface has a surface roughness in maximum height (nominal value of Rz) of 3.2 μm as specified in Appendix 1 (Reference) of JIS B 0659-1: 2002, Comparative Surface Roughness Standard Specimen, Table 2; corner R: 2.0 mm; ridge line R: 1.0 mm) and a corresponding mold (male surface has a surface roughness in maximum height (nominal value of Rz) of 1.6 μm as specified in Appendix 1 (Reference) of JIS B 0659-1: 2002, Comparative Surface Roughness Standard Specimen, Table 2; corner R: 2.0 mm; ridge line R: 1.0 mm), the test sample was subjected to cold molding (draw molding in one stage) in an environment at 25°C while the molding depth was changed by units of 0.5 mm from a molding depth of 0.5 mm under a pressing force (surface pressure) of 0.25 MPa. This procedure was carried out for 10 samples at each depth. At this time, the molding was performed with the test

sample placed on the female mold so that the heat-sealable resin layer was located on the male mold side. The male mold and the female mold had a clearance of 0.3 mm. For the sample after cold molding, light was applied with a penlight in a dark room, and whether or not pinholes or cracks were generated in the aluminum alloy foil was checked on the basis of transmission of light. The deepest of depths at which none of the 10 samples had pinholes or cracks in the aluminum alloy foil was defined as a critical molding depth P mm. Samples having a critical molding depth of 4.0 mm or more were rated A, samples having a critical molding depth of 3.5 mm were rated B, and samples having a critical molding depth of 3.0 mm or less were rated C. Table 3 shows the results.

<Measurement of logarithmic decrement ΔE of first heat-sealable resin layer>

The obtained exterior material for electrical storage devices was cut into a rectangle having a width of 15 mm (TD: Transverse Direction) and a length of 45 mm (MD: Machine Direction) to obtain a test sample (exterior material 10 for electrical storage devices) The MD of the exterior material for electrical storage devices corresponds to the rolling direction (RD) of the aluminum alloy foil, the TD of the exterior material for electrical storage devices corresponds to the TD of the aluminum alloy foil, and the rolling direction (RD) of the aluminum alloy foil can be determined by rolling streaks. If the MD of the exterior material for electrical storage devices cannot be identified by the rolling streaks of the aluminum alloy foil, the MD can be identified by the following method. As a method for identifying the MD of the exterior material for electrical storage devices, a cross-section of the heat-sealable resin layer of the exterior material for electrical storage devices is observed with an electron microscope to examine a sea-island structure, and a direction parallel to a cross-section having the largest average of diameters of island shapes in a direction perpendicular to the thickness direction of the heat-sealable resin layer can be determined as the MD. Specifically, a cross-section in the length direction of the heat-sealable resin layer and cross-sections (a total of 10 cross-sections) at angular intervals of 10 degrees from a direction parallel to the cross-section in the length direction to a direction perpendicular to the cross-section in the length direction are observed with an electron microscope photograph to examine sea-island structures. Next, in each cross-section, the shape of each island is observed. For the shape of each island, the linear distance between the leftmost end in a direction perpendicular to the thickness direction of the heat-sealable resin layer and the rightmost end in the perpendicular direction is defined as a diameter y. In each cross-section, the average of the top 20 diameters y in descending order of the diameter y of the island shape is calculated. The direction parallel to a cross-section having the largest average of the diameters y of the island shapes is determined as MD. Fig. 10 is a schematic diagram for illustrating a method for measuring a logarithmic decrement ΔE by rigid pendulum measurement. A rigid pendulum type physical property tester (model: RPT-3000W manufactured by A&D Company, Limited) was used, FRB -100 was used for a frame of a pendulum 30, RBP-060 was used for a cylindrical cylinder edge 30a of an edge portion, CHB -100 was used for a cold block 31, a vibration displacement detector 32 and a weight 33 were used, and an initial amplitude was 0.3 degrees. The test sample was placed on the cold block 31 in such a manner that the measurement surface (first heat-sealable resin layer) of the test sample faced upward. The cylindrical cylinder edge 30a with the pendulum 30 was installed on the measurement surface in such a manner that the axial direction of the cylindrical cylinder edge 30a was orthogonal to the machine direction of the test sample. In addition, for preventing floating and warpage of the test sample during measurement, a tape was attached to the test sample at a position having no effect on measurement results, and fixed on the cold block 31. The cylindrical cylinder edge 30a was brought into contact with the surface of the first heat-sealable resin layer. Next, the logarithmic decrement ΔE of the first heat-sealable resin layer was measured in a temperature range from 30°C to 200°C at a temperature rise rate of 3°C/min using the cold block 31. A logarithmic decrement ΔE was adopted at which the surface temperature of the first heat-sealable resin layer of the test sample (exterior material 10 for electrical storage devices) was 140°C. (An average of three measurements (N=3) made by using an unused cut sample rather than using a test sample once measured was used)For the first heat-sealable resin layer, each of the obtained exterior materials for electrical storage devices was immersed in 15% hydrochloric acid to dissolve the base material layer and the aluminum foil, the test sample including only the adhesive layer and the heat-sealable resin layer was sufficiently dried, and the logarithmic decrement ΔE was measured. Table 3 shows the logarithmic decrements ΔE at 140°C. The logarithmic decrement ΔE is calculated in accordance with the following expression.

$$\Delta E = [\ln(A1/A2) + \ln(A2/A3) + ... + \ln(An/An+1)]/n$$

A: amplitude
n: wavenumber

<Measurement of residual ratio of thickness of first heat-sealable resin layer>

Each of the obtained exterior materials for electrical storage devices was cut to a length of 150 mm and a width

of 60 mm to prepare a test sample (exterior material 10 for electrical storage devices). Next, the first heat-sealable resin layers of the test sample prepared from the same exterior material for electrical storage devices were opposed to each other. Next, in this state, the test sample was heated and pressed from both sides in the lamination direction under the conditions of a temperature of 190°C, a surface pressures (MPa) as shown in Table 1 and a time of 3 seconds with the use of a 7 mm-wide metal plate to heat-seal the first heat-sealable resin layer. Next, the heat-sealed portion of the test sample was cut in the lamination direction using a microtome, and the thickness of the two first heat-sealable resin layers heat-sealed to each other was measured at the exposed cross-section. Similarly, the test sample before heat-sealing was cut in the lamination direction using a microtome, and the thickness of the two first heat-sealable resin layers was measured at the exposed cross section. The ratio of the total thickness of the two first heat-sealable resin layers after heat-sealing to the total thickness of the two first heat-sealable resin layers before heat-sealing was calculated, and the residual ratio (%) of the total thickness of the two first heat-sealable resin layers was measured. Table 3 shows the results.

<Evaluation of insulation quality of exterior material for electrical storage devices>

Each of the exterior materials for electrical storage devices was cut into a rectangle of 120 mm in length (MD) × 60 mm in width (TD), folded in the machine direction with the heat-sealable resin layers matching each other, sealed with a seal width of 3 mm (conditions: 190°C, 2 MPa, 3 seconds), and then cut into a width (TD) of 15 mm to obtain a test sample. In 1 L of propylene carbonate/diethylene carbonate = 1/1 (volume ratio), 152 g of lithium hexafluorophosphate was dissolved to prepare 1 mol/L of an electrolytic solution. Next, in a 200 mL bipolar beaker cell, the 15 mm-wide test sample was set in the positive electrode so as to open the sealed portion, metal lithium was set in the negative electrode, and the electrolytic solution was added. Here, the test sample was folded in the machine direction so as to oppose the heat-sealable resin layers of the test sample to each other, and the folded portion was heat-sealed. Next, an end part was opened by 180 ° without breaking the heat-sealed part. Next, the end part of the test sample was nipped with an alligator clip, the alligator clip was allowed to reach the aluminum alloy foil of the test sample, and the alligator clip and the aluminum alloy foil were electrically connected. In this state, a potential difference of 1 V was applied for 12 hours and 24 hours, followed by visual observation of generation of a lithium aluminum alloy (black foreign matter) at the heat-sealed portion. This enables evaluation of whether or not cracks are generated from the side of accumulated resin formed in the heat-sealed portion of the test sample, so that the electrolytic solution permeates, resulting in occurrence of corrosion (generation of black foreign matter). Samples with black foreign matter generated within 12 hours was rated C, samples with black foreign matter generated within more than 12 hours and less than 24 hours was rated B, and samples with black foreign matter generated at 24 hours were rated A. Table 3 shows the results.

[Table 1]

| No. | Chemical component of aluminum alloy foil (mass%) | | | | | Conditions for manufacturing aluminum alloy foil | | | | | | | | |
|---|---|---|---|---|---|---|---|---|---|---|---|---|---|---|
| | | | | | | Homogenization treatment | | Cold rolling | | Intermediate annealing | | Final cold rolling ratio (%) | Final annealing | |
| | Si | Fe | Mn | Mg | Al + inevitable impurities | Temperature (°C) | Time (h) | Sheet thickness (mm) | Cold rolling ratio (%) | Temperature (°C) | Time (h) | | Temperature (°C) | Time (h) |
| 1 | 0.14 | 1.2 | 0.04 | 0.20 | Balance | 530 | 10 | 0.7 | 76.7 | 360 | 5 | 94.3 | 300 | 5 |
| 2 | 0.42 | 1.0 | 0.02 | 1.00 | Balance | 530 | 10 | 0.7 | 76.7 | 360 | 5 | 94.3 | 300 | 5 |
| 3 | 0.15 | 1.2 | 0.03 | 0.05 | Balance | 530 | 10 | 0.7 | 76.7 | 360 | 5 | 94.3 | 300 | 5 |
| 4 | 0.15 | 1.2 | 0.05 | 5.50 | Balance | 530 | 10 | 0.7 | 76.7 | 360 | 5 | 94.3 | 300 | 5 |

[Table 2]

| No. | Crystal grain structure | | Texture | | Mg concentration (at%) | Oxide film (Å) | Mechanical property | | Moldability | | Piercing strength | | Corrosion resistance | |
|---|---|---|---|---|---|---|---|---|---|---|---|---|---|---|
| | Average grain size (μm) | L1/L2 | Copper | R | | | Breaking elongation (%) | Tensile strength (MPa) | Critical bulging height (mm) | Moldability score | Load (N) | Piercing score | Evaluation score on corrosion by electrolytic solution | |
| | | | | | | | | | | | | | 3 hours | 10 hours |
| 1 | 12.6 | 3.3 | 13.6 | 10.9 | 6.5 | 100 | 18.9 | 112 | 9.5 | ○ | 9.2 | ○ | ○ | ○ |
| 2 | 18.8 | 4.2 | 10.6 | 10.2 | 16.0 | 190 | 11.5 | 155 | 7.5 | ○ | 10.0 | ○ | ○ | ○ |
| 3 | 13.3 | 2.7 | 14.0 | 11.4 | 3.9 | 81 | 20.3 | 98 | 10.5 | ○ | 8.4 | × | × | × |
| 4 | 11.4 | 3.7 | 11.6 | 11.3 | 25.6 | 396 | 23.4 | 340 | 4.5 | × | 15.9 | ○ | ○ | ○ |

[Table 3]

| Table 3 | Aluminum alloy foil No. | Logarithmic decrement ΔE of first heat-sealable resin layer at 140°C | Evaluation | | | | | | |
|---|---|---|---|---|---|---|---|---|---|
| | | | Corrosion resistance of aluminum alloy foil | Moldability | Insulation quality | Residual ratio of total thickness of two first heat-sealable resin layers (%) | | | |
| | | | | | | Surface pressure 0.5 MPa | Surface pressure 1.0 MPa | Surface pressure 1.5 MPa | Surface pressure 2.0 MPa |
| Example 1 | 1 | 0.12 | A | A | A | 71 | 53 | 40 | 34 |
| Example 2 | 2 | 0.12 | A | A | A | 70 | 54 | 42 | 35 |
| Example 3 | 1 | 0.12 | A | A | A | 80 | 58 | 44 | 40 |
| Example 4 | 1 | 0.21 | A | A | B | 62 | 40 | 28 | 24 |
| Comparative Example 1 | 3 | 0.12 | C | A | A | 71 | 53 | 40 | 34 |
| Comparative Example 2 | 4 | 0.12 | A | C | A | 71 | 53 | 40 | 34 |
| Comparative Example 3 | 1 | 0.31 | A | A | C | 60 | 38 | 26 | 21 |

The exterior material for electrical storage devices in each of Examples 1 to 4 includes a laminate including at least a base material layer, a barrier layer, and a heat-sealable resin layer in this order, in which the barrier layer includes an aluminum alloy foil formulated to have a Fe content of 0.2 mass% or more and 2.0 mass% or less, and a Mg content of 0.1 mass% or more and 5.0 mass% or less, the heat-sealable resin layer is composed of a single layer or multiple layers, and a first heat-sealable resin layer of the heat-sealable resin layer, which forms a surface of the laminate, has a logarithmic decrement $\Delta E$ of 0.25 or less at 140°C in measurement with a rigid pendulum. The exterior material for electrical storage devices in each of Examples 1 to 4, is excellent in moldability, and effectively resists corrosion of the aluminum alloy foil if an electric current passes in a state where an electrolytic solution is deposited, with the exterior material having high mechanical strength and high moldability, with exterior material having improved insulation quality.

As described above, the present disclosure provides the invention of the following aspects.

Item 1. An exterior material for electrical storage devices including a laminate including at least a base material layer, a barrier layer, and a heat-sealable resin layer in this order, in which the barrier layer includes an aluminum alloy foil formulated to have a Fe content of 0.2 mass% or more and 2.0 mass% or less, and a Mg content of 0.1 mass% or more and 5.0 mass% or less,

the heat-sealable resin layer is composed of a single layer or multiple layers, and

a first heat-sealable resin layer of the heat-sealable resin layer, which forms a surface of the laminate, has a logarithmic decrement $\Delta E$ of 0.25 or less at 140°C in measurement with a rigid pendulum.

Item 2. The exterior material for electrical storage devices according to item 1, in which the aluminum alloy foil is formulated to have a Mn content of 0.1 mass% or less.

Item 3. The exterior material for electrical storage devices according to item 1 or 2, in which the aluminum alloy foil is formulated to have a Si content of 0.5 mass% or less.

Item 4. The exterior material for electrical storage devices according to any one of items 1 to 3, in which the aluminum alloy foil has a tensile strength of 100 MPa or more and a breaking elongation of 10% or more as measured for a JIS No. 5 test piece in accordance with the provisions of JIS Z 2241: 2011.

Item 5. The exterior material for electrical storage devices according to any one of items 1 to 4, in which a thickness of the first heat-sealable resin layer is 5 μm or more and 25 μm or less.

Item 6. The exterior material for electrical storage devices according to any one of items 1 to 5, in which after the first heat-sealable resin layers of the laminate are opposed to each other and heated and pressed in a laminating direction under conditions of a temperature of 190°C, a surface pressure of 2.0 MPa and a time of 3 seconds, a residual ratio of a total thickness of the two first heat-sealable resin layers opposed to each other is 30% or more.

Item 7. The exterior material for electrical storage devices according to any one of items 1 to 6, in which the resin forming the first heat-sealable resin layer contains a polyolefin backbone.

Item 8. The exterior material for electrical storage devices according to any one of items 1 to 7, including an adhesive layer between the barrier layer and the heat-sealable resin layer.

Item 9. The exterior material for electrical storage devices according to item 8, in which a total thickness of the adhesive layer and the heat-sealable resin layer is 50 μm or more.

Item 10. The exterior material for electrical storage devices according to item 8 or 9, in which a thickness of the adhesive layer is equal to or larger than the thickness of the first heat-sealable resin layer.

Item 11. The exterior material for electrical storage devices according to any one of items 8 to 10, in which the heat-sealable resin layer includes the first heat-sealable resin layer and the second heat-sealable resin layer in this order from the surface side of the laminate, and a thickness of the second heat-sealable resin layer is equal to or larger than the thickness of the adhesive layer.

Item 12. The exterior material for electrical storage devices according to any one of items 8 to 11, in which the thickness of the second heat-sealable resin layer is larger than the thickness of the first heat-sealable resin layer.

Item 13. The exterior material for electrical storage devices according to any one of items 8 to 12, in which the adhesive layer has a thickness of 50 μm or less.

Item 14. The exterior material for electrical storage devices according to any one of items 1 to 13, in which a slipping agent is present on a surface of the first heat-sealable resin layer.

Item 15. The exterior material for electrical storage devices according to any one of items 1 to 14, in which in the aluminum alloy foil, a ratio between a length of a high-angle grain boundary L1 and a length of a low-angle grain boundary L2 per unit area as measured by an electron backscatter diffraction method satisfies the relationship of L1/L2 > 3.0.

Item 16. The exterior material for electrical storage devices according to item 15, in which

the aluminum alloy foil is formulated to have a Mg content of 0.1 mass% or more and 1.5 mass% or less, and at least one surface of the aluminum alloy foil contains Mg in an amount of 5.0 atm% or more, and at least one surface of the aluminum alloy foil has an oxide film with a thickness of 80 Å or more.

Item 17. The exterior material for electrical storage devices according to item 15 or 16, in which

the aluminum alloy foil is formulated to have a Mg content of 0.1 mass% or more and 1.5 mass% or less, and the aluminum alloy foil has a tensile strength of 110 MPa or more and 180 MPa or less, and a breaking elongation of 10% or more.

Item 18. The exterior material for electrical storage devices according to item 15, in which

the aluminum alloy foil is formulated to have a Mg content of more than 1.5 mass% and 5.0 mass% or less, and at least one surface of the aluminum alloy foil contains Mg in an amount of 15.0 atm% or more, and at least one surface of the aluminum alloy foil has an oxide film with a thickness of 120 Å or more.

Item 19. The exterior material for electrical storage devices according to item 15 or 18, in which

the aluminum alloy foil is formulated to have a Mg content of more than 1.5 mass% or more and 5.0 mass% or less, and
the aluminum alloy foil has a tensile strength of 180 MPa or more, and a breaking elongation of 15% or more.

Item 20. The exterior material for electrical storage devices according to any one of items 15 to 19, in which the aluminum alloy foil has a texture orientation density of 15 or less in each of Copper orientation and R orientation.
Item 21. The exterior material for electrical storage devices according to any one of items 15 to 20, in which the aluminum alloy foil has an average crystal grain size of 25 μm or less.
Item 22. The exterior material for electrical storage devices according to any one of items 15 to 21, in which the aluminum alloy foil contains Mn in an amount of 0.1 mass% or less as an inevitable impurity.
Item 23. The exterior material for electrical storage devices according to any one of items 15 to 22, in which the aluminum alloy foil is formulated to have a Si content of 0.5 mass% or less.
Item 24. An electrical storage device in which an electrical storage device element including at least a positive electrode, a negative electrode and an electrolyte is housed in a packaging formed of the exterior material for electrical storage devices according to any one of items 1 to 23.
Item 25. A method for manufacturing an exterior material for electrical storage devices, the method including the step of laminating at least a base material layer, a barrier layer, and a heat-sealable resin layer in this order to obtain a laminate, in which

the barrier layer includes an aluminum alloy foil formulated to have a Fe content of 0.2 mass% or more and 2.0 mass% or less, and a Mg content of 0.1 mass% or more and 5.0 mass% or less,
the heat-sealable resin layer is composed of a single layer or multiple layers, and
a first heat-sealable resin layer of the heat-sealable resin layer, which forms a surface of the laminate, has a logarithmic decrement ΔE of 0.25 or less at 140°C in measurement with a rigid pendulum.

DESCRIPTION OF REFERENCE SIGNS

1: Base material layer
2: Adhesive agent layer
3: Barrier layer
4: Heat-sealable resin layer
5: Adhesive layer
6: Surface coating layer
10: Exterior material for electrical storage devices
41: First heat-sealable resin layer
42: Second heat-sealable resin layer

## Claims

1. An exterior material for electrical storage devices comprising a laminate including at least a base material layer, a barrier layer, and a heat-sealable resin layer in this order,

   wherein the barrier layer includes an aluminum alloy foil formulated to have a Fe content of 0.2 mass% or more and 2.0 mass% or less, and a Mg content of 0.1 mass% or more and 5.0 mass% or less,
   the heat-sealable resin layer is composed of a single layer or multiple layers, and
   a first heat-sealable resin layer of the heat-sealable resin layer, which forms a surface of the laminate, has a logarithmic decrement $\Delta E$ of 0.25 or less at 140°C in measurement with a rigid pendulum.

2. The exterior material for electrical storage devices according to claim 1, wherein the aluminum alloy foil is formulated to have a Mn content of 0.1 mass% or less.

3. The exterior material for electrical storage devices according to claim 1 or 2, wherein the aluminum alloy foil is formulated to have a Si content of 0.5 mass% or less.

4. The exterior material for electrical storage devices according to claim 1 or 2, wherein the aluminum alloy foil has a tensile strength of 100 MPa or more and a breaking elongation of 10% or more as measured for a JIS No. 5 test piece in accordance with the provisions of JIS Z 2241: 2011.

5. The exterior material for electrical storage devices according to claim 1 or 2, wherein a thickness of the first heat-sealable resin layer is 5 μm or more and 25 μm or less.

6. The exterior material for electrical storage devices according to claim 1 or 2, wherein after the first heat-sealable resin layers of the laminate are opposed to each other and heated and pressed in a laminating direction under conditions of a temperature of 190°C, a surface pressure of 2.0 MPa and a time of 3 seconds, a residual ratio of a total thickness of the two first heat-sealable resin layers opposed to each other is 30% or more.

7. The exterior material for electrical storage devices according to claim 1 or 2, wherein a resin forming the first heat-sealable resin layer has a polyolefin backbone.

8. The exterior material for electrical storage devices according to claim 1 or 2, further comprising an adhesive layer between the barrier layer and the heat-sealable resin layer.

9. The exterior material for electrical storage devices according to claim 8, wherein a total thickness of the adhesive layer and the heat-sealable resin layer is 50 μm or more.

10. The exterior material for electrical storage devices according to claim 8, wherein a thickness of the adhesive layer is equal to or larger than the thickness of the first heat-sealable resin layer.

11. The exterior material for electrical storage devices according to claim 8, wherein the heat-sealable resin layer includes the first heat-sealable resin layer and a second heat-sealable resin layer in this order from the surface side of the laminate, and a thickness of the second heat-sealable resin layer is equal to or more than the thickness of the adhesive layer.

12. The exterior material for electrical storage devices according to claim 8, wherein the thickness of the second heat-sealable resin layer is larger than the thickness of the first heat-sealable resin layer.

13. The exterior material for electrical storage devices according to claim 8, wherein the adhesive layer has a thickness of 50 μm or less.

14. The exterior material for electrical storage devices according to claim 1 or 2, wherein a slipping agent is present on a surface of the first heat-sealable resin layer.

15. The exterior material for electrical storage devices according to claim 1 or 2, wherein in the aluminum alloy foil, a ratio between a length of a high-angle grain boundary L1 and a length of a low-angle grain boundary L2 per unit area as measured by an electron backscatter diffraction method satisfies the relationship of $L1/L2 > 3.0$.

**16.** The exterior material for electrical storage devices according to claim 15, wherein

the aluminum alloy foil is formulated to have a Mg content of 0.1 mass% or more and 1.5 mass% or less, and at least one surface of the aluminum alloy foil contains Mg in an amount of 5.0 atm% or more, and at least one surface of the aluminum alloy foil has an oxide film with a thickness of 80 Å or more.

**17.** The exterior material for electrical storage devices according to claim 15, wherein

the aluminum alloy foil is formulated to have a Mg content of 0.1 mass% or more and 1.5 mass% or less, and the aluminum alloy foil has a tensile strength of 110 MPa or more and 180 MPa or less, and a breaking elongation of 10% or more.

**18.** The exterior material for electrical storage devices according to claim 15, wherein

the aluminum alloy foil is formulated to have a Mg content of more than 1.5 mass% and 5.0 mass% or less, and at least one surface of the aluminum alloy foil contains Mg in an amount of 15.0 atm% or more, and at least one surface of the aluminum alloy foil has an oxide film with a thickness of 120 Å or more.

**19.** The exterior material for electrical storage devices according to claim 15, wherein

the aluminum alloy foil is formulated to have a Mg content of more than 1.5 mass% and 5.0 mass% or less, and the aluminum alloy foil has a tensile strength of 180 MPa or more, and a breaking elongation of 15% or more.

**20.** The exterior material for electrical storage devices according to claim 15, wherein the aluminum alloy foil has a texture orientation density of 15 or less in each of Copper orientation and R orientation.

**21.** The exterior material for electrical storage devices according to claim 15, wherein the aluminum alloy foil has an average crystal grain size of 25 μm or less.

**22.** The exterior material for electrical storage devices according to claim 15, wherein the aluminum alloy foil contains Mn in an amount of 0.1 mass% or less as an inevitable impurity.

**23.** The exterior material for electrical storage devices according to claim 15, wherein the aluminum alloy foil is formulated to have a Si content of 0.5 mass% or less.

**24.** An electrical storage device in which an electrical storage device element including at least a positive electrode, a negative electrode and an electrolyte is housed in a packaging formed of the exterior material for electrical storage devices according to claim 1 or 2.

**25.** A method for manufacturing an exterior material for electrical storage devices, the method comprising the step of laminating at least a base material layer, a barrier layer, and a heat-sealable resin layer in this order to obtain a laminate, wherein

the barrier layer includes an aluminum alloy foil formulated to have a Fe content of 0.2 mass% or more and 2.0 mass% or less, and a Mg content of 0.1 mass% or more and 5.0 mass% or less,
the heat-sealable resin layer is composed of a single layer or multiple layers, and
a first heat-sealable resin layer of the heat-sealable resin layer, which forms a surface of the laminate, has a logarithmic decrement ΔE of 0.25 or less at 140°C in measurement with a rigid pendulum.

FIG. 1

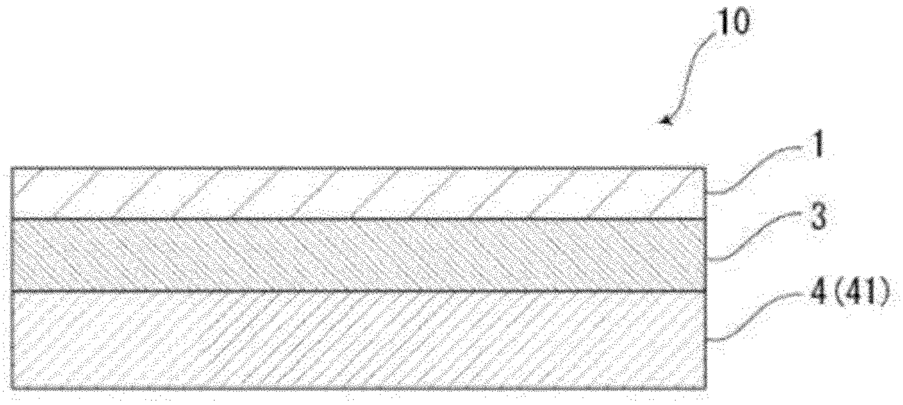


FIG. 2

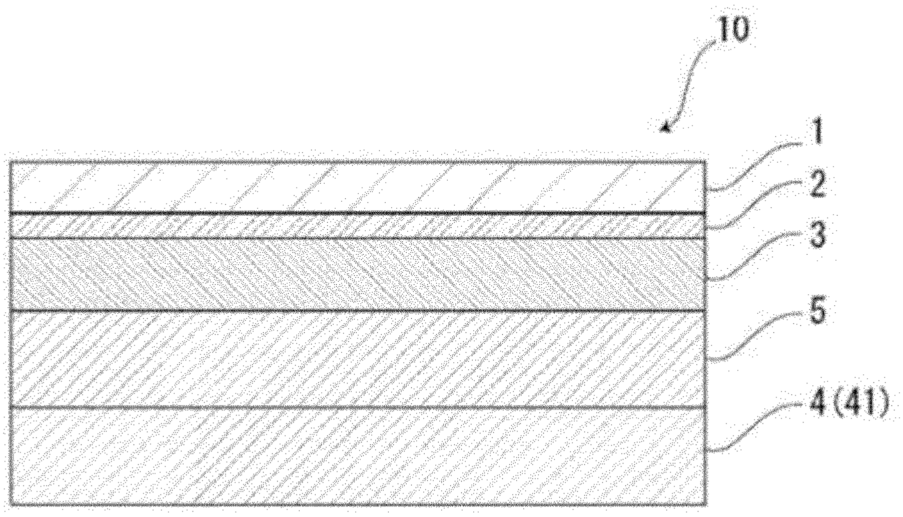


FIG. 3

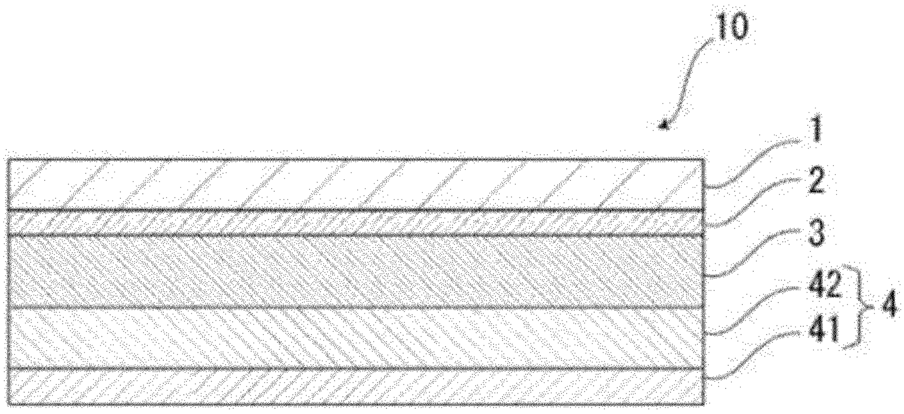

FIG. 4

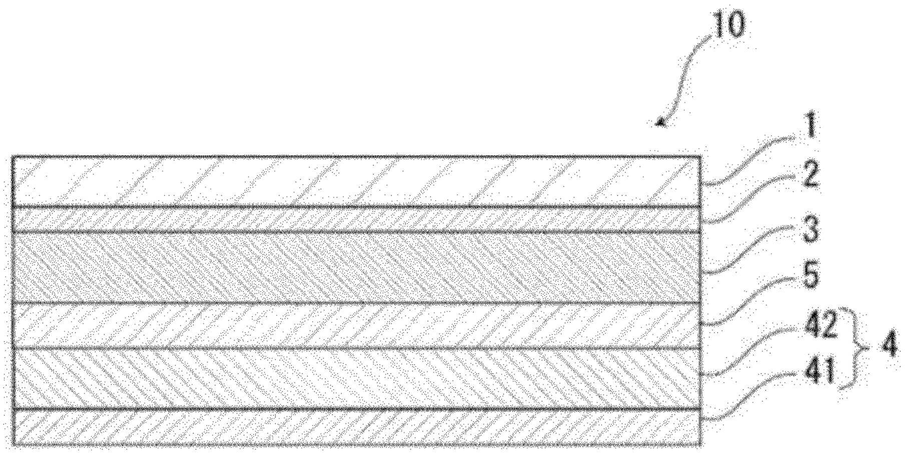


FIG. 5

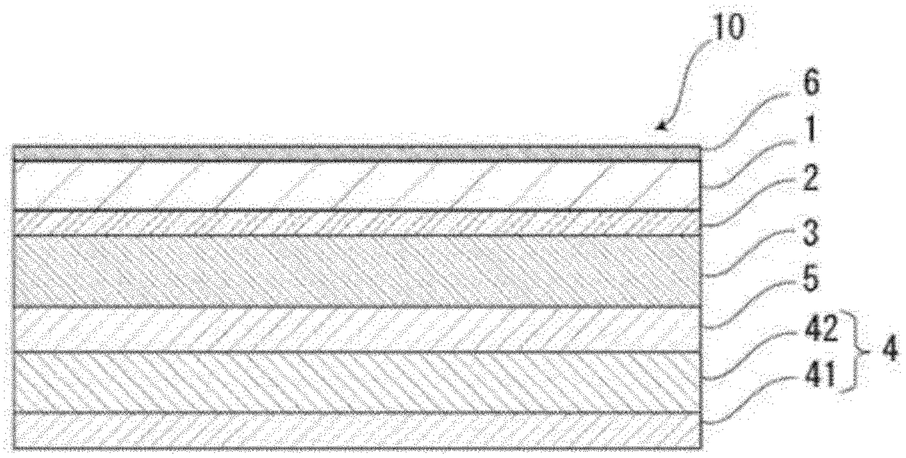


FIG. 6

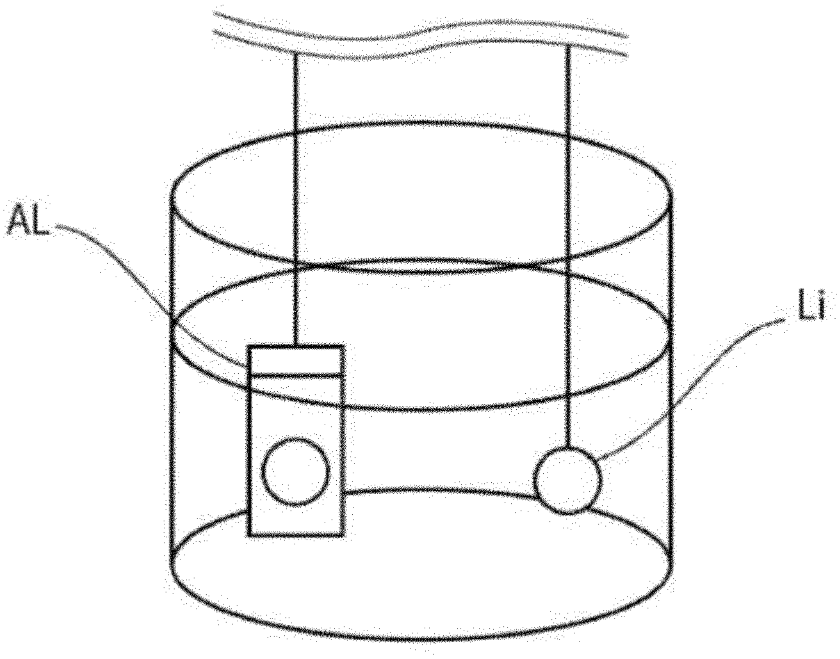

FIG. 7

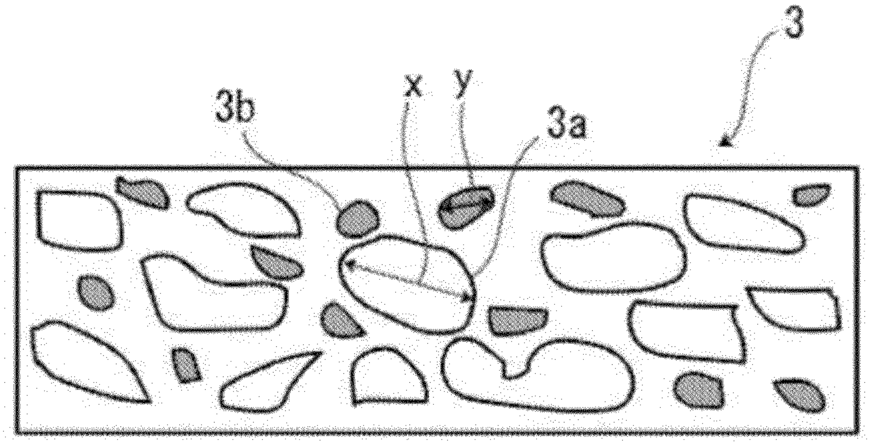


FIG. 8

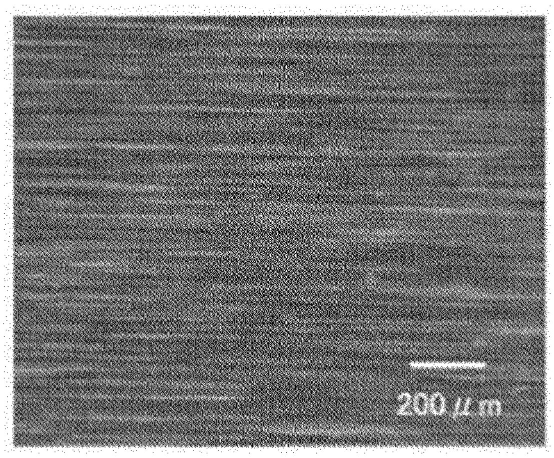


FIG. 9

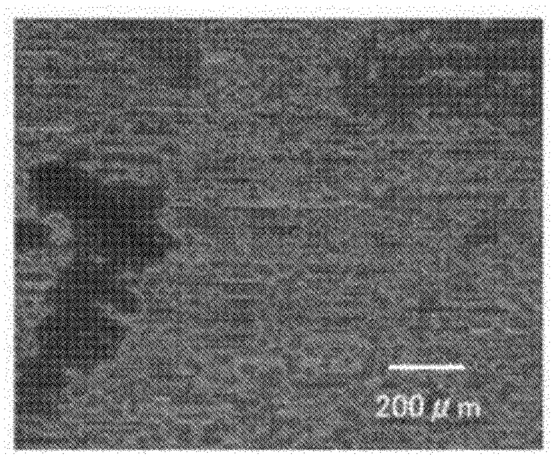

FIG. 10

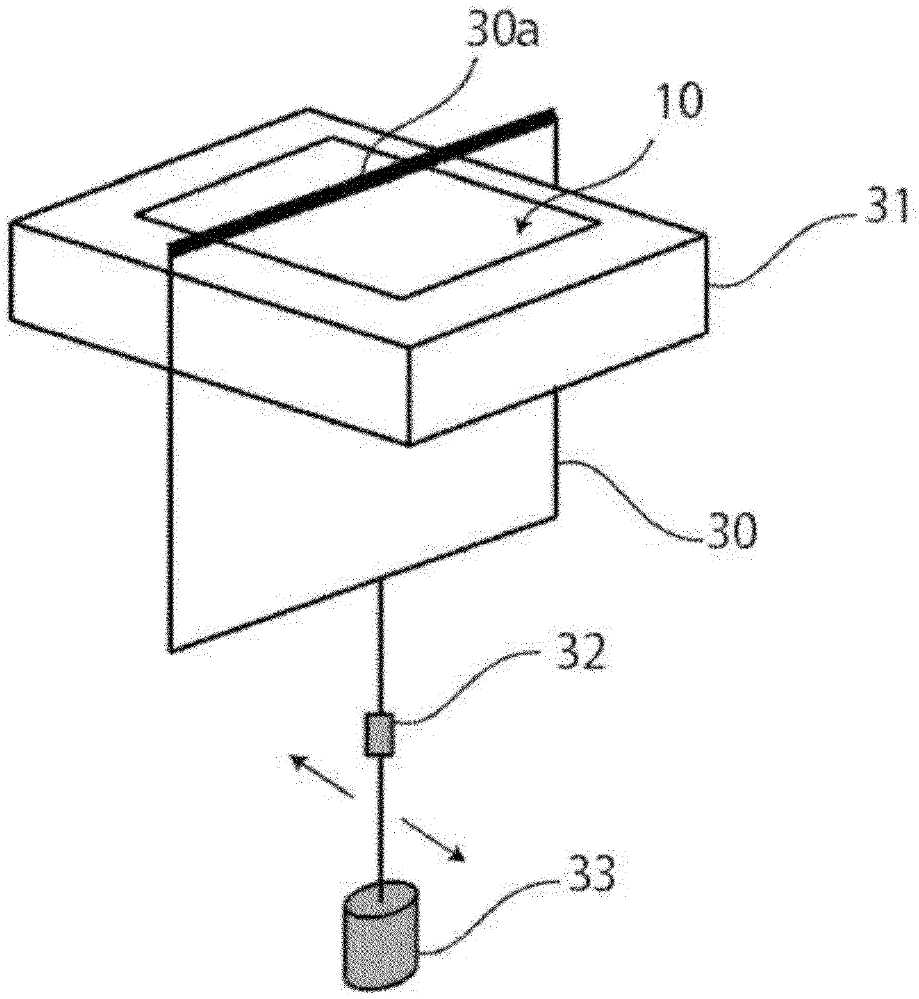


FIG. 11

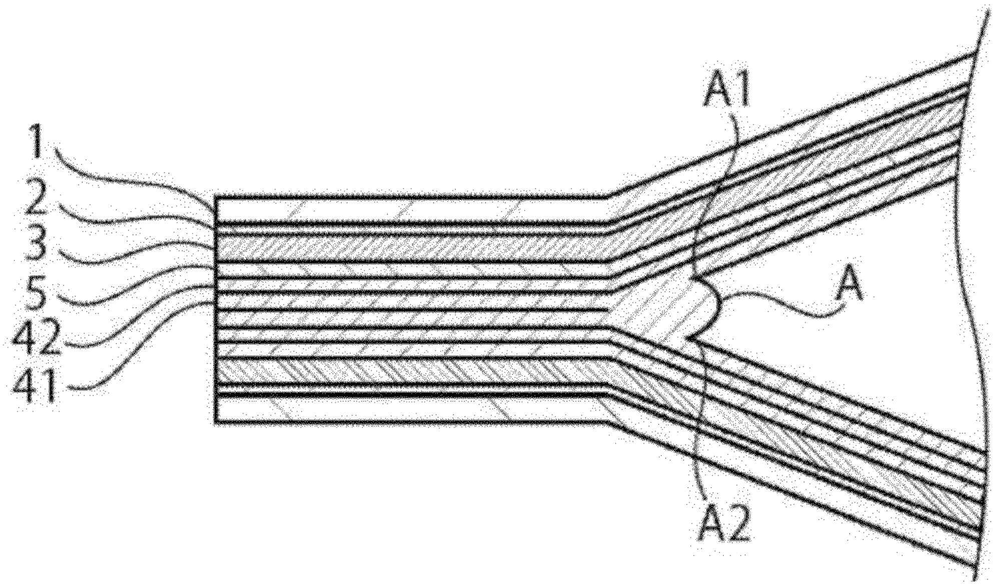

FIG. 12

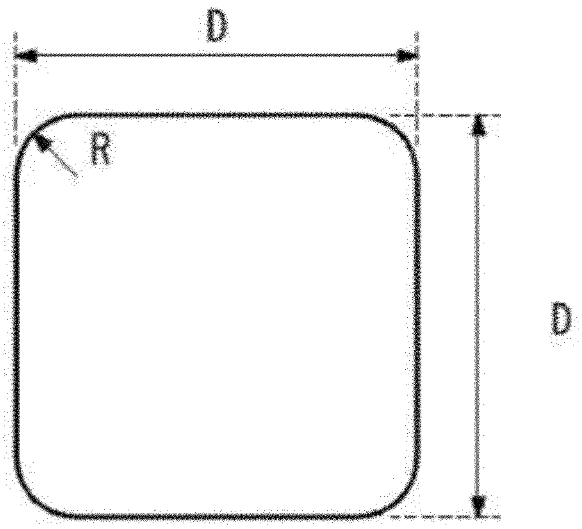

## INTERNATIONAL SEARCH REPORT

International application No. **PCT/JP2022/026108**

**A. CLASSIFICATION OF SUBJECT MATTER**

***H01M 50/105***(2021.01)i; ***H01G 11/78***(2013.01)i; ***H01M 50/119***(2021.01)i; ***H01M 50/121***(2021.01)i; ***H01M 50/129***(2021.01)i; ***H01M 50/133***(2021.01)i
FI: H01M50/105; H01M50/129; H01M50/119; H01M50/121; H01G11/78; H01M50/133

According to International Patent Classification (IPC) or to both national classification and IPC

**B. FIELDS SEARCHED**

Minimum documentation searched (classification system followed by classification symbols)

H01M50/105; H01G11/78; H01M50/119; H01M50/121; H01M50/129; H01M50/133

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | WO 2020/085189 A1 (DAINIPPON PRINTING CO., LTD.) 30 April 2020 (2020-04-30) paragraphs [0013], [0023], [0084]-[0096], [0151], [0152] | 1-15, 19, 21-25<br>16-18, 20 |
| Y<br>A | WO 2020/085462 A1 (DAINIPPON PRINTING CO., LTD.) 30 April 2020 (2020-04-30) paragraphs [0013], [0050], [0069]-[0108] | 1-15, 19, 21-25<br>16-18, 20 |
| Y | JP 2021-75778 A (MITSUBISHI ALUM CO., LTD.) 20 May 2021 (2021-05-20) paragraphs [0002], [0016], table 2 | 15, 19, 21-23 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 August 2022** | **06 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/026108**

| Patent document cited in search report | Publication date (day/month/year) | Patent family member(s) | Publication date (day/month/year) |
|---|---|---|---|
| WO 2020/085189 A1 | 30 April 2020 | (Family: none) | |
| WO 2020/085462 A1 | 30 April 2020 | US 2022/0013306 A1<br>paragraphs [0024], [0061], [0076]-[0117]<br>CN 112912982 A<br>KR 10-2021-0076022 A | |
| JP 2021-75778 A | 20 May 2021 | WO 2020/0137394 A1<br>CN 112867806 A<br>KR 10-2021-0060589 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008287971 A
- JP 2005163077 A